# EUROPEAN PATENT APPLICATION

(11) **EP 4 746 256 A1**
(43) Date of publication of application: **20.05.2026**
(21) Application number: 24844264.2
(22) Date of filing: 29.03.2024
(51) Int. Cl.: H02K 3/28, H02K 3/04, H02K 21/24, H02K 3/12, H02K 1/16, H02K 3/50

(54) **WINDING STRUCTURE, STATOR, AXIAL ELECTRIC MOTOR, POWER ASSEMBLY, AND OUTPUT DEVICE**

(30) Priority: 21.07.2023 CN 202310905620
(71) Applicant: Contemporary Amperex Intelligence Technology (Shanghai) Limited, Shanghai 201306 (CN)
(72) Inventor: HUANG, Liren, Fengxian District, Shanghai 201306 (CN); XIANG, Bin, Fengxian District, Shanghai 201306 (CN); XIA, Ji, Fengxian District, Shanghai 201306 (CN)
(74) Representative: Gong, Jinping
(86) International application number: PCT/CN2024/084838
(87) International publication number: WO 2025/020567

(57) **Abstract**

The present invention provides a winding structure, a stator, an axial motor, a power assembly, and an output device. The winding structure (30) includes multiple conductor components (310), where the multiple conductor components (310) are arranged to form an annular body (300). The conductor component (310) includes a main body portion (311), the main body portion (311) extends along a radial direction of the annular body (300), the main body portions (311) of at least some of the multiple conductor components (310) are connected in series via connecting wires (G4), and lead-out wires (G5) are respectively provided at two ends of a winding formed by the multiple main body portions (311) connected in series. This structure not only facilitates the positional arrangement of the main body portions (311) of the conductor components (310), but also facilitates the series connection of the conductor components (310) to the lead-out wires (G5), without requiring a complicated winding process, thereby simplifying the structure and facilitating assembly and preparation.

## Description

The present application claims priority to the Chinese Patent Application No. 202310905620.9, filed with the China National Intellectual Property Administration on July 21, 2023 and entitled "WINDING STRUCTURE, STATOR, AXIAL MOTOR, POWER ASSEMBLY, AND OUTPUT DEVICE", which is incorporated herein by reference in its entirety.

### TECHNICAL FIELD

The present application belongs to the field of motor technology, and more specifically relates to a winding structure, a stator, an axial motor, a power assembly, and an output device.

### BACKGROUND

The statements herein merely provide background information related to the present application and do not necessarily constitute the prior art. A motor, such as an electric motor or a generator, includes a stator and a rotor. For some motors, the stator structure mainly includes a stator core and a winding wound on the stator core. Whereas, axial motors have gained increasing attention due to their advantages such as compact structure, high efficiency, and high power density. In an existing motor, multiple wire slots are typically provided on a stator core, each phase of coil has multiple pole pairs, corresponding windings are wound in the wire slots, and multiple coils are arranged in a stacked manner in each wire slot. Use of flat-wire windings allows for better adaption to the stator slot shape to increase the slot fill rate. However, a current winding topology of axial motors is relatively complicated, making it difficult to wind with flat wires.

### SUMMARY

Embodiments of the present application are intended to provide a winding structure, a stator, an axial motor, a power assembly, and an output device, to solve the problem in the related art that it is difficult to wind the windings of axial motors using flat wires.

According to a first aspect, an embodiment of the present application provides a winding structure, including multiple conductor components, where the multiple conductor components are arranged to form an annular body; and
the conductor component includes a main body portion, the main body portion extends along a radial direction of the annular body, the main body portions of at least some of the multiple conductor components are connected in series via connecting wires, and lead-out wires are respectively provided at two ends of a winding formed by the multiple main body portions connected in series.

In the technical solution of this embodiment of the present application, by providing multiple conductor components and arranging the conductor components to form an annular body, the positional layout of each conductor component is facilitated. The main body portions of the conductor components are arranged along the radial direction, the main body portions of at least some of the multiple conductor components are connected in series via connecting wires, and lead-out wires are provided at two ends of the winding formed by the multiple main body portions connected in series, not only facilitating the positional arrangement of the main body portions of the conductor components, but also facilitating the series connection of the conductor components to the lead-out wires, without requiring a complicated winding process, thereby simplifying the structure and facilitating assembly and preparation.

In some embodiments, a cross section of the conductor component is circular, elliptical, or polygonal. If the cross section of the conductor component is rectangular, the conductor component is a flat-wire conductor, and a stator winding obtained by winding with flat-wire conductors is used to construct a flat-wire motor.

This structure of the conductor component facilitates shape selection of the conductor component and facilitates manufacturing of the winding structure.

In some embodiments, the connecting wires include first connecting wires and second connecting wires; the conductor components are provided in pairs; one end of each of the two main body portions of each pair of conductor components and one end of the other main body portion are connected in series via the first connecting wire; and in two pairs of conductor components connected in series: the other end of one main body portion in one pair of conductor components is connected to the other end of one main body portion in the other pair of conductor components via the second connecting wire.

This structure facilitates the series connection of the conductor components. Especially, two paired conductor components are connected via the first connecting wire, achieving more convenient connection. The other end of one main body portion in one pair of conductor components is connected to the other end of one main body portion in the other pair of conductor components via the second connecting wire so as to connect the two pairs of conductor components in series, so that the other ends of the two main body portions in the middle of the two pairs of conductor components connected in series are connected via the second connecting wire, or the shape of the second connecting wire is formed first before connection, which also facilitates assembly and thus facilitates the manufacturing of the winding structure.

In some embodiments, a span of the first connecting wires is full pitch.

Setting the span of the first connecting wires as full pitch facilitates batch forming and manufacturing to reduce costs and also facilitates connection of the paired conductor components.

In some embodiments, the annular body has N layers of main body portions stacked along an axial direction; the two main body portions of each pair of conductor components are respectively located in the M-th layer and the (M-1)-th layer; N is an even number; M is an even number; and N ≥ M.

The position of each main body portion is set with an even number of layers of main body portions to increase the magnetic force during operation of the winding structure; and providing the main body portions of each pair of conductor components in the M-th layer and the (M-1)-th layer can facilitate the assembly of each pair of conductor components.

In some embodiments, along the axial direction of the annular body: the lead-out wires connected to two ends of the winding formed by the series-connected main body portions are located in the same layer, the main body portions connected to the lead-out wires are in the first layer, the second connecting wires in the first layer are first-layer connecting wires, and a span of the first-layer connecting wires is long pitch or short pitch;
the layer farthest from the first layer is the last layer, the second connecting wires in the last layer are last-layer connecting wires, and a span of the last-layer connecting wires is full pitch; and
the second connecting wires connecting the H-th layer main body portion and the (H+1)-th layer main body portion are cross-layer connecting wires, and a span of the cross-layer connecting wires is long pitch, full pitch, or short pitch, H is an even number, and N ≥ H.

Providing the lead-out wires in the first layer facilitates the connection and leadout of the lead-out wires for use; setting the span of the first-layer connecting wires as long pitch or short pitch can allow for more flexible arrangement of the first-layer connecting wire, thereby facilitating the arrangement of the conductor components for manufacturing the winding structure; and setting the span of the last-layer connecting wires as full pitch can facilitate forming and connection of the last-layer connecting wires. Setting the span of the cross-layer connecting wires as full pitch, long pitch, or short pitch can allow for more flexible arrangement of the cross-layer connecting wires, thereby facilitating the arrangement of the conductor components for manufacturing the winding structure.

In some embodiments, the winding structure forms P magnetic pole pairs, a quantity of series-connected main body portions is A, and the first main body portion and the A-th main body portion are respectively connected to lead-out wires. In the second connecting wires connecting the 2KP-th main body portion and the (2KP+1)-th main body portion: the second connecting wire connecting the 2KNP-th main body portion and the (2KNP+1)-th main body portion is the first-layer connecting wire, the second connecting wire connecting the (2K-1)NP-th main body portion and the ((2K-1)NP+1)-th main body portion is the last-layer connecting wire, and the remaining second connecting wires are cross-layer connecting wires, A is a positive integer, P is a positive integer, K is a positive integer, and 2KNP < A.

Through the above structure, the positions of the first-layer connecting wire, last-layer connecting wire, and cross-layer connecting wire as well as the numbers of the main body portions connected thereto can be determined, facilitating pre-processing and assembly connection.

In some embodiments, the conductor component further includes an inner segment and an outer segment, the inner segment is connected to a radial inner end of the main body portion, the outer segment is connected to a radial outer end of the main body portion, and the two inner segments of each pair of conductor components are connected to form the first connecting wire. In two pairs of conductor components connected in series, the outer segment of one main body portion in one pair of conductor components is connected to the outer segment of one main body portion in the other pair of conductor components to form the second connecting wire.

The conductor component is provided with an inner segment and an outer segment, and the two inner segments of each pair of conductor components are connected to form the first connecting wire, facilitating the arrangement of the first connecting wire and the series connection of this pair of conductor components. Connecting two outer segments to form the second connecting wire to connect two pairs of conductor components in series also facilitates the arrangement of the second connecting wire. An addition, this structure can reduce occupied space and a volume of the winding structure.

In some embodiments, the conductor component is manufactured using flat wires through integral formation.

The conductor component is manufactured using flat wires through integral formation, meaning the inner segment, main body portion, and outer segment are manufactured using flat wires through integral formation, facilitating processing and manufacturing of the conductor component, maintaining uniformity of resistivity along the length of the conductor component, thereby reducing impedance of the conductor component, and improving conductive performance of the conductor component.

In some embodiments, each pair of conductor components is manufactured using flat wires through integral formation.

Each pair of paired conductor components is manufactured using flat wires through integral formation, meaning one flat wire is pre-formed into two conductor components, with the inner segments of the two conductor components being integrally formed, facilitating processing and manufacturing as well as assembly of the conductor components to form the winding structure.

In some embodiments, in two pairs of conductor components connected in series: the two outer segments in the middle are welded together.

The two outer segments in the middle of the two pairs of conductor components to be connected in series are welded together, meaning the two outer segments forming the second connecting wire are welded to enhance connection strength, providing good conductive performance between the two outer segments, reducing the impedance between the two outer segments, and facilitating connection.

In some embodiments, the winding structure forms P magnetic pole pairs, P being a positive integer.

By setting a quantity of the magnetic pole pairs formed by the winding structure to a positive integer, the quantity of the magnetic pole pairs can be set as needed, facilitating the design and application range of the winding structure.

In some embodiments, the annular body has N layers of main body portions stacked along the axial direction, a quantity of the main body portions located in the same axial layer of the annular body and in the same magnetic pole is q, N is an even number, and q is a positive integer.

When the above structure is applied in a stator, a quantity of slots per pole per phase of the stator can be q, facilitating the design and manufacturing of the winding structure, where q is a positive integer, and the quantity of the slots per pole per phase is set as needed to expand the application range of the winding structure design.

In some embodiments, when q ≥ 2, the q main body portions located in the same axial layer of the annular body and in the same magnetic pole are adjacently arranged.

Adjacently arranging the q main body portions in the same layer and in the same magnetic pole can concentrate the generated magnetic field to enhance the magnetic field strength.

In some embodiments, the winding structure includes a single-phase winding, and the winding is made from multiple conductor components connected in series;
or, the winding structure includes multi-phase windings, the winding is made from multiple conductor components connected in series, all phases of windings have the same structure, and the multi-phase windings are uniformly distributed along a circumferential direction of the winding structure.

The winding structure includes a single-phase winding and therefore has a simple structure and can be applied to a single-phase stator. When the winding structure includes multi-phase windings, setting the multi-phase winding structures to be identical simplifies the structure of each phase of winding, facilitating processing and manufacturing for application to a multi-phase stator.

According to a second aspect, an embodiment of the present application provides a stator including the winding structure as described in any of the above embodiments.

The stator of this embodiment of the present application uses the above winding structure, simplifying the structure and facilitating assembly and manufacturing.

In some embodiments, the stator further includes a stator core, the stator core is provided with stator slots for accommodating the main body portions of the winding structure, and the main body portions are placed in corresponding stator slots.

Providing a stator core and placing the main body portions in corresponding stator slots not only facilitates fixation of the main body portions to mount and fix the winding structure, but also enhances the magnetic field strength generated by the winding structure through the stator core, thereby increasing the power of the axial motor using the stator.

In some embodiments, the stator slots are provided on an axial side of the stator core; or, the stator slots are respectively provided on two opposite axial sides of the stator core.

Providing stator slots on one side of the stator core allows for mounting of the winding structure on one side of the stator core for application to an axial motor with a rotor arranged on one side of the stator.

Providing stator slots respectively on two opposite sides of the stator core allows for mounting of winding structures respectively on the two opposite sides of the stator core for application to an axial motor with rotors arranged respectively on two opposite sides of the stator.

According to a third aspect, an embodiment of the present application provides an axial motor including a rotating shaft, a rotor, and the stator as described in any of the above embodiments, where the rotor is fixedly mounted on the rotating shaft, the stator is rotatably mounted on the rotating shaft, and the stator is located on a side surface of the rotor.

The axial motor of this embodiment of the present application uses the stator of the above embodiments, simplifying the structure, reducing costs, improving manufacturing efficiency, and reducing the size of the axial motor.

In some embodiments, a stator is provided on at least one side of the rotor; and/or, a rotor is provided on at least one side of the stator.

Providing a stator on at least one side of the rotor can facilitate the positional layout of the stator. Providing a rotor on at least one side of the stator facilitates the positional layout of the rotor.

In some embodiments, there are multiple rotors, with a stator provided between two adjacent rotors; and/or, there are multiple stators, with a rotor provided between two adjacent stators.

Providing multiple rotors enables a structure of an axial motor with multiple rotors. Providing multiple stators enables a structure of an axial motor with multiple rotors.

According to a fourth aspect, an embodiment of the present application provides a power assembly including the stator as described in any of the above embodiments or including the axial motor as described in the above embodiments.

According to a fifth aspect, an embodiment of the present application provides an output device including the axial motor as described in any of the above embodiments or including the power assembly as described in the above embodiments.

The above description is merely an overview of the technical solutions of the present application. To understand the technical means of the present application more clearly and implement them in accordance with the content of the specification, and to make the above and other objectives, features, and advantages of the present application more apparent, specific embodiments of the present application are particularly described below.

### BRIEF DESCRIPTION OF DRAWINGS

To describe the technical solutions in the embodiments of the present application more clearly, the drawings used in the embodiments or exemplary technical descriptions are briefly introduced below. Obviously, the drawings described below are merely some embodiments of the present application, and those of ordinary skill in the art can obtain other drawings based on these drawings without creative efforts.
FIG. 1 is a schematic structural diagram of a vehicle according to some embodiments of the present application;
FIG. 2 is a schematic structural diagram of an axial motor according to some embodiments of the present application;
FIG. 3 is a schematic structural diagram of an axial motor according to some other embodiments of the present application;
FIG. 4 is a schematic structural diagram of an axial motor according to still some embodiments of the present application;
FIG. 5 is a schematic structural diagram of an axial motor according to yet some embodiments of the present application;
FIG. 6 is a schematic structural exploded view of a stator according to some embodiments of the present application;
FIG. 7 is a schematic structural diagram of a conductor component according to some embodiments of the present application;
FIG. 8 is a schematic structural diagram of a pair of conductor components according to some embodiments of the present application;
FIG. 9 is a schematic diagram of connecting wires of a U-phase winding of a winding structure according to some embodiments of the present application;
FIG. 10 is a schematic diagram of connecting wires of a V-phase winding of the winding structure in FIG. 9;
FIG. 11 is a schematic diagram of connecting wires of a W-phase winding of the winding structure in FIG. 9;
FIG. 12 is a schematic diagram of connecting wires of a U-phase winding of a winding structure according to some embodiments of the present application;
FIG. 13 is a schematic diagram of connecting wires of a U-phase winding of a winding structure according to some other embodiments of the present application;
FIG. 14 is a schematic diagram of connecting wires of a U-phase winding of a winding structure according to still embodiments of the present application;
FIG. 15 is a schematic diagram of connecting wires of a U-phase winding of a winding structure according to yet some embodiments of the present application;
FIG. 16 is a schematic diagram of connecting wires of a U-phase winding of a winding structure according to further embodiments of the present application;
FIG. 17 is a schematic diagram of connecting wires of a U-phase winding of a winding structure according to still further embodiments of the present application;
FIG. 18 is a schematic diagram of connecting wires of a U-phase winding of a winding structure according to some embodiments of the present application;
FIG. 19 is a schematic diagram of connecting wires of a U-phase winding of a winding structure according to some other embodiments of the present application; and
FIG. 20 is a schematic diagram of connecting wires of a U-phase winding of a winding structure according to still some embodiments of the present application.

In the drawings, the main reference numerals in each figure are:
1000. vehicle; 1001. power assembly; 100. axial motor; 200. transmission; 1002. controller; 1003. battery;
10. rotor; 11. rotating shaft;
20. stator; 21. stator core; 211. stator slot; 22. fixing bracket;
30. winding structure; 300. annular body; 310. conductor component; 311. main body portion; 312. inner segment; 313. outer segment; G4. connecting wire; G41. first connecting wire; G42. second connecting wire; G421. first-layer connecting wire; G422. last-layer connecting wire; G423. cross-layer connecting wire; G424. inter-layer connecting wire; and G5. lead-out wire.

### DESCRIPTION OF EMBODIMENTS

To make the technical problems solved by the present application, the technical solutions, and beneficial effects clearer, the present application is further described in detail below with reference to the drawings and embodiments. It should be understood that the specific embodiments described here are merely used to explain the present application and are not intended to limit it.

Unless otherwise defined, all technical and scientific terms used herein have the same meaning as commonly understood by those skilled in the technical field of the present application; the terms used herein are only for describing specific embodiments and are not intended to limit the present application; the terms "include", "comprise", "have", and any variations thereof in the specification and claims of the present application and the above drawings are intended to cover non-exclusive inclusion.

In the description of the embodiments of the present application, the technical terms "first", "second", and the like are merely used to distinguish different objects and cannot be understood as indicating or implying relative importance or implicitly indicating the quantity, specific sequence or primary and secondary relationship of the indicated technical features. Therefore, the features limited by "first", "second", and the like can explicitly or implicitly indicate that one or more of such features are included.

The phrase "embodiment" mentioned herein means that a particular feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments in any appropriate manner.

In the description of the embodiments of the present application, the term "and/or" is merely a relational term describing associated objects, indicating that three relationships may exist, for example, A and/or B may indicate the following three cases: only A is present, both A and B are present, or only B is present. In addition, the character "/" herein generally indicates an "or" relationship between the contextually associated objects.

In the description of the embodiments of the present application, the term "multiple" refers to two or more (including two). Similarly, "multiple groups" refers to two or more groups (including two groups), and "multiple pieces" refers to two or more pieces (including two pieces). "Several" means one or more, unless otherwise explicitly specified.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings, merely for convenience in describing the embodiments of the present application and simplifying the description, and do not indicate or imply that the referred apparatus or element must have a specific orientation or be constructed and operated in a specific orientation, and thus cannot be understood as limiting the embodiments of the present application.

In the description of the embodiments of the present application, unless otherwise explicitly specified and limited, the technical terms "mounting", "connection", "join", "fix", and the like should be understood in a broad sense, for example, it can be fixed connection, detachable connection, or integral connection; it can be mechanical connection or electrical connection; it can be direct connection or indirect connection through an intermediate medium; it can be internal communication between two elements or interaction between two elements. For those of ordinary skill in the art, the specific meanings of the above terms in the embodiments of the present application can be understood according to specific situations.

In the description of the embodiments of the present application, unless otherwise explicitly specified and limited, when an element is referred to as being "fixed to" or "disposed on" another element, it can be directly on the another element or indirectly on the another element. When an element is referred to as being "connected to" another element, it can be directly connected to the another element or indirectly connected to the another element.

In the description of the embodiments of the present application, unless otherwise explicitly specified and limited, the technical term "adjacent" refers to positional proximity. For example, for three parts A₁, A₂, and B, if a distance between A₁ and B is greater than a distance between A₂ and B, A₂ is closer to B than A₁, that is, A₂ is adjacent to B, or B is adjacent to A₂. Similarly, when there are multiple C parts and the multiple C parts are respectively C₁, C₂ ..., and C_{N}, if one C part, such as C₂, is closer to the B part than other C parts, B is adjacent to C₂, or C₂ is adjacent to B.

In the embodiments of the present application, a motor is also called an electric motor (Motor), generally including two parts, a rotor and a stator, and the motor is a device that converts electrical energy and mechanical energy mutually, including electric motors and generators. A fixed part in the motor is called a stator (stator); and a rotating part in the motor is called a rotor (rotor).

For an electric motor, the stator refers to a stationary part of the motor and is configured to generate a rotating magnetic field. The rotor refers to a rotating component in the motor and is configured to achieve conversion between electrical energy and mechanical energy. The stator generally generates a rotating magnetic field through its windings so as to drive the rotor to rotate. A stator winding refers to a winding mounted on the stator. Winding is a general term for a phase or an entire electromagnetic circuit including multiple coils or coil groups. Coil group: in a motor, q coils belonging to the same phase of winding under one pole pitch are connected in series to form a group which is called a coil group, also called a pole-phase group. The coils in the pole-phase group are the same in current direction and electromagnetic effect, and these coils together generate a magnetic pole in this phase of winding.

Other terms in the embodiments of the present application are explained as follows.

Phase winding: it refers to a set of winding formed by one or more parallel branches connected in series or in parallel according to a specified connection method.

Parallel branch: in a motor, one or more coils formed by one or more pole-phase groups connected according to a specified connection method are called a parallel branch. For a motor with low rated power, generally all pole-phase groups of the winding are connected in series according to a specified connection method into one path and then connected to a power supply. However, an electric motor with high rated power requires large current, so all pole-phase groups of the winding need to be first connected in series into two or more branches and then connected in parallel according to a specified wiring method to a power supply, which is called a parallel branch.

Quantity of magnetic pole pairs: after a motor winding is energized, a magnetic field is generated, magnetic poles are correspondingly formed, and the magnetic poles appear in pairs as N poles and S poles, which are also called quantity of magnetic pole pairs, abbreviated as quantity of pole pairs. When the quantity of magnetic pole pairs is P, the quantity of magnetic poles is 2P, and the quantity of magnetic poles should be an even number.

Pole pitch: refers to a distance occupied by each magnetic pole of the motor along a circumferential surface of an air gap. Pole pitch can be expressed by a quantity of stator slots in the stator core. Exemplarily, when a pole pitch is Z/2P, Z is a total quantity of stator slots in the stator core, and P is a quantity of magnetic pole pairs. The stator slot refers to a slot structure provided on the stator core for winding coils.

Pitch: refers to a distance spanned by centers of two effective sides of one coil on the circumference of the stator, which is counted as the quantity of the stator slots, that is, the quantity of slots spanned between the two effective sides of one coil. Pitch can be represented by y, where a value of y is represented by the quantity of the slots. For example: y=8, conventionally represented as (1-9) slots, meaning one side of the coil is embedded in the first slot, the other side is embedded in the ninth slot, and a distance between center lines of the slots spanned by the two sides is 8 slots (including half of the first slot and half of the ninth slot).

When pitch y is equal to a pole pitch, it is called full pitch and is also called a full distance. When pitch y is less than a pole pitch, it is called short pitch. When pitch y is greater than a pole pitch, it is called long pitch.

Span: refers to a distance spanned by two element sides of the same element in the motor winding on an armature surface, usually expressed by the quantity of stator slots provided on the stator core.

Connecting wire: refers to a conductive wire connecting two effective sides of a coil. Connecting wire pitch: refers to an equivalent span between conductors in slots connected by a connecting wire. Depending on the spanned pitch of the connecting wire, the pitch can be divided into full pitch, short pitch, and long pitch. Full pitch: refers to a connecting wire whose pitch is equal to a pole pitch. Short pitch: refers to a connecting wire whose pitch is less than a pole pitch. Long pitch: refers to a connecting wire whose pitch is greater than a pole pitch.

Lead-out wire: refers to a conductive wire connected to two ends of a winding, and the conductive wire is led out to be connected to a control circuit of a motor and is configured to supply power to coils in the winding, so as to enable the coils to generate a magnetic field.

Quantity of slots per pole per phase: a quantity of slots per pole per phase is generally represented by q, and the quantity of slots per pole per phase is the quantity of slots occupied by each phase of winding of the motor under each magnetic pole.

Motors can be divided into radial motors and axial motors. A radial motor refers to a motor in which a stator and a rotor are arranged along a radial direction, such as a motor in which the stator is located on the periphery of the rotor or the rotor is located on the periphery of the stator. To be specific, a motor in which the stator sleeves the periphery of the rotor or the rotor sleeves the periphery of the stator is a radial motor. An axial motor refers to a motor in which the stator and rotor are arranged axially. Axial motors have gained increasing attention due to their advantages such as compact structure, high efficiency, and high power density. For axial motors, the stator is located on a side surface of the rotor; and correspondingly, the rotor is also located on a side surface of the stator. For convenience of description, a side of the rotor close to the stator is defined as a stator side, and a side of the stator close to the rotor is defined as a rotor side.

A stator generally includes a stator core (also called a stator iron core) and a winding, where the winding is wound on the stator core. To facilitate winding of the winding, stator slots are provided on the stator core to accommodate the winding. The stator core can strengthen the magnetic field generated by the winding, increasing the power of the motor using the stator. Certainly, for some motors, to reduce weight, it is acceptable that no stator core is used, and a core-free stator is formed by directly using the magnetic field generated by the winding.

Torque output of a motor is determined by a voltage applied to a conductive wire of a winding, the density of the conductive wire, and a quantity of coils, and a maximum speed is determined by magnitude of current flowing through the coils. Slot fill factor is a ratio of a cross-sectional area occupied by a copper wire in a stator slot to a total available space in a bare slot. The greatest challenge in stator manufacturing is to maximize the amount of copper wires inserted into each slot (commonly called "slot fill rate") to maximize the torque output.

Coil groups made with flat wires can be called flat wire windings, and the flat wire windings can better adapt to the shape of stator slots and increase the slot fill rate. Flat wire refers to a conductive wire with its width greater than its thickness, having a roughly rectangular cross section.

In most current winding topologies for axial motors, a conductive wire is directly wound on the stator core to form coils, or the coils are directly mounted on the stator core after winding. However, due to a large width of the flat wire, it is difficult for the flat wire to bend in the width direction, causing a large difficulty in forming the coils by winding the conductive wire. Moreover, for high-power motors, since the cross section of the flat wire is large, directly winding a flat wire to form coils results in loosening of the flat wire, reducing the slot fill rate.

Based on the above considerations, to solve the problem of difficulty in winding a flat wire to form a winding of an axial motor, an embodiment of the present application provides a winding structure provided with multiple conductor components connected in series via connecting wires, and the conductor components are arranged to form an annular body, facilitating positional layout of each conductor component. Lead-out wires are provided at two ends formed by the multiple main body portions connected in series, not only facilitating positional arrangement of the main body portions of the conductor components, but also facilitating the series connection of the conductor components to the lead-out wires, without requiring a complicated winding process, thereby simplifying the structure and facilitating assembly and preparation.

The stator disclosed in this embodiment of the present application can be used in axial motors. Axial motors can be applied as power structures in power assemblies, output devices, and the like, as power sources. Power assemblies can also be applied in output devices. Output devices may include but are not limited to electric toys, electric tools, electric bicycles, electric motorcycles, electric vehicles, ships, and spacecraft. Electric toys may include fixed or mobile electric toys, such as game consoles, electric car toys, electric ship toys, and electric airplane toys. Spacecraft may include airplanes, rockets, space shuttles, and spaceships.

Output devices may be electric vehicles or vehicle chassis. An axial motor may be integrated with one or more of elements such as a power source, a controller, and a transmission to form a power assembly.

For convenience of explanation, an example in which an output device provided in an embodiment of the present application is a vehicle is used for description.

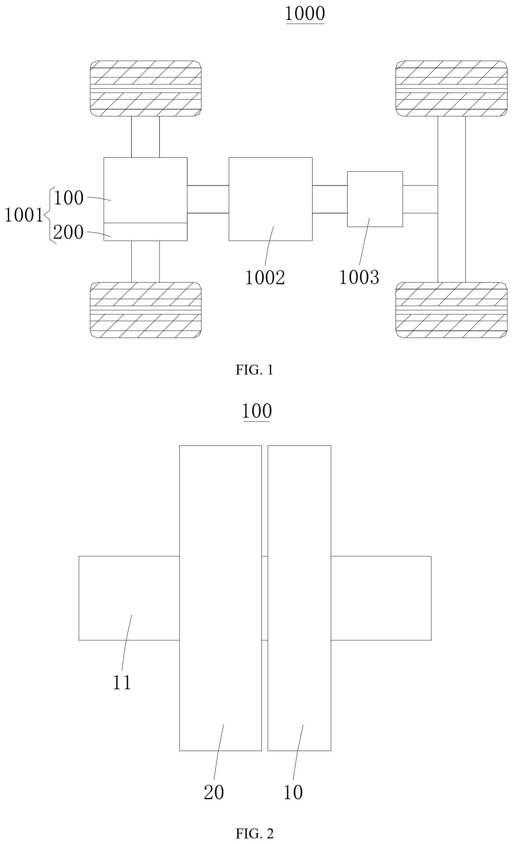

Reference is made to FIG. 1, where FIG. 1 is a schematic structural diagram of a vehicle 1000 according to some embodiments of the present application. The vehicle 1000 may be a fuel vehicle, gas vehicle, or new energy vehicle, where the new energy vehicle may be a battery electric vehicle, a hybrid vehicle, an extended-range vehicle, or the like. The interior of the vehicle 1000 is provided with a power assembly 1001, and the power assembly 1001 may be arranged at the bottom, front, or rear of the vehicle 1000. The power assembly 1001 may be configured to provide driving force for the vehicle 1000. The vehicle 1000 may further include a controller 1002 and a battery 1003, where the controller 1002 is configured to control the operation of the power assembly 1001, for example, controlling startup, speed change, and stop of the power assembly 1001. The controller 1002 may also be configured to control the battery 1003 to supply power to the power assembly 1001, for example, for startup, navigation, and operational power needs during driving of the vehicle 1000.

In some embodiments, the power assembly 1001 includes an axial motor 100, where the axial motor 100 serves as a power source of the power assembly 1001. Understandably, the power assembly 1001 is not limited to being used in the vehicle 1000 but can also be used in other devices requiring power output.

In some embodiments, the power assembly 1001 may further include a transmission 200, where the transmission 200 is connected to the axial motor 100 to achieve torque change of the axial motor 100. Transmission (English: Transmission), also called a gearbox, is a mechanism for changing a rotating speed and torque from an input device, in which a transmission ratio between an output shaft and an input shaft can be set to a fixed value or changed.

In some embodiments, the controller 1002 can be integrated with the axial motor 100 to form the power assembly 1001.

In some embodiments, the battery 1003 can be integrated with the axial motor 100 to form the power assembly 1001.

In some embodiments, the transmission 200 and controller 1002 can be integrated with the axial motor 100 to form the power assembly 1001.

In some embodiments, the transmission 200, controller 1002, and battery 1003 can all be integrated with the axial motor 100 to form the power assembly 1001. Certainly, other structures such as thermal management devices can also be integrated into the power assembly 1001.

Reference is made to FIG. 2, where FIG. 2 is a schematic structural diagram of an axial motor 100 according to an embodiment of the present application.

An embodiment of the present application provides an axial motor 100 including a rotating shaft 11, a stator 20, and a rotor 10, where the rotor 10 is fixedly mounted on the rotating shaft 11, the stator 20 is rotatably mounted on the rotating shaft 11, and the stator 20 is located on a side surface of the rotor 10.

The rotating shaft 11 refers to a shaft in the axial motor 100 for outputting power. The rotating shaft 11 is fixedly connected to the rotor 10, rotatable under the drive of the rotor 10 to output power. The stator 20 is rotatably mounted on the rotating shaft 11 to allow the rotating shaft 11 to rotate relative to the stator 20.

The stator 20 being located on a side surface of the rotor 10 means the stator 20 is located on an axial side of the rotor 10, enabling the stator 20 to drive the rotor 10 to rotate, thereby driving the rotating shaft 11 to rotate.

Axial direction refers to an axial direction of the rotating shaft 11, and the axial direction of the rotating shaft 11 is also an axial direction of the stator 20 and an axial direction of the rotor 10. Therefore, axial direction also refers to the axial direction of the rotor 10.

Radial direction refers to a radial direction of the rotating shaft 11, and the radial direction of the rotating shaft 11 is also a radial direction of the stator 20 and a radial direction of the rotor 10. Therefore, radial direction also refers to the radial direction of the rotor 10.

Circumferential direction refers to a direction around an axis of the rotating shaft 11, also a direction around an axis of the rotor 10.

In some embodiments, there may be one rotor 10 and one stator 20, where the stator 20 is located on a side of the rotor 10, resulting in a simple structure and small volume of the axial motor 100. In this structure, a side of the rotor 10 close to the stator 20 is a stator side.

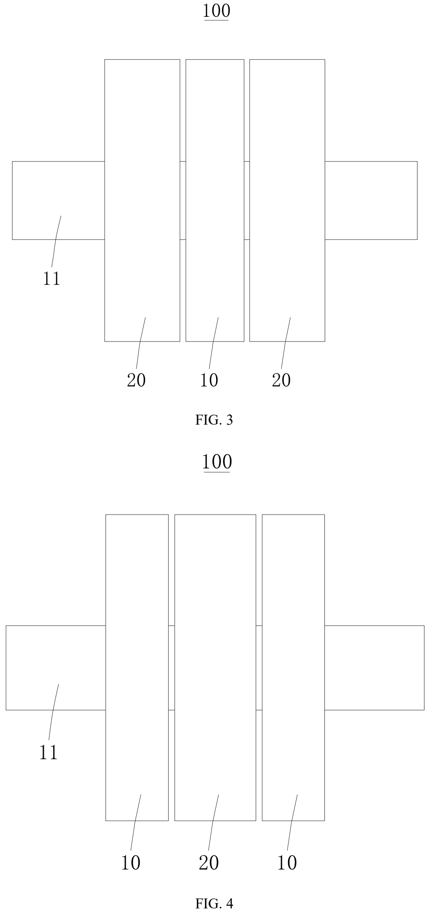

Reference is made to FIG. 3, where FIG. 3 is a schematic structural diagram of an axial motor 100 according to an embodiment of the present application.

In some embodiments, the axial motor 100 includes two stators 20 and one rotor 10, where the two stators 20 are located on two opposite sides of the rotor 10, allowing the two stators 20 to drive the same rotor 10 to rotate, thereby increasing output power, and achieving a more compact structure of the axial motor 100. In this structure, since the stators 20 are provided on two opposite sides of the rotor 10, the two opposite sides of the rotor 10 are both stator sides.

Reference is made to FIG. 4, where FIG. 4 is a schematic structural diagram of an axial motor 100 according to an embodiment of the present application.

In some embodiments, the axial motor 100 includes two rotors 10 and one stator 20, where the two rotors 10 are located on two opposite sides of the stator 20, allowing one stator 20 to drive two rotors 10 to rotate and drive the same rotating shaft 11 to rotate, thereby increasing output power, and achieving a more compact structure of the axial motor 100. In this structure, since a stator 20 is provided on one side of each rotor 10, the side of the rotor 10 close to the stator 20 is a stator side.

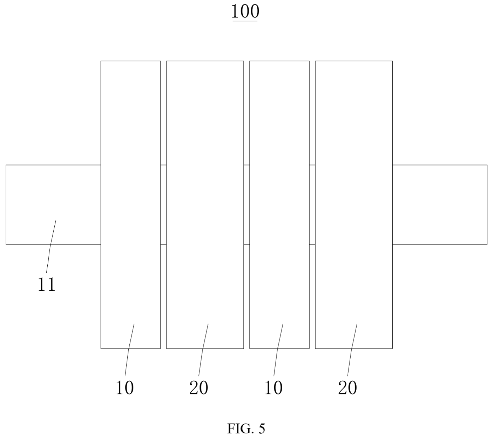

Reference is made to FIG. 5, where FIG. 5 is a schematic structural diagram of an axial motor 100 according to an embodiment of the present application.

In some embodiments, the axial motor 100 includes multiple rotors 10 and multiple stators 20, where a stator 20 is provided between two adjacent rotors 10, and a rotor 10 is provided between two adjacent stators 20, so that multiple rotors 10 are driven to rotate through multiple stators 20, and thus the rotating shaft 11 is driven to rotate, thereby increasing output power. In this structure, the side of each rotor 10 close to the stator 20 is a stator side.

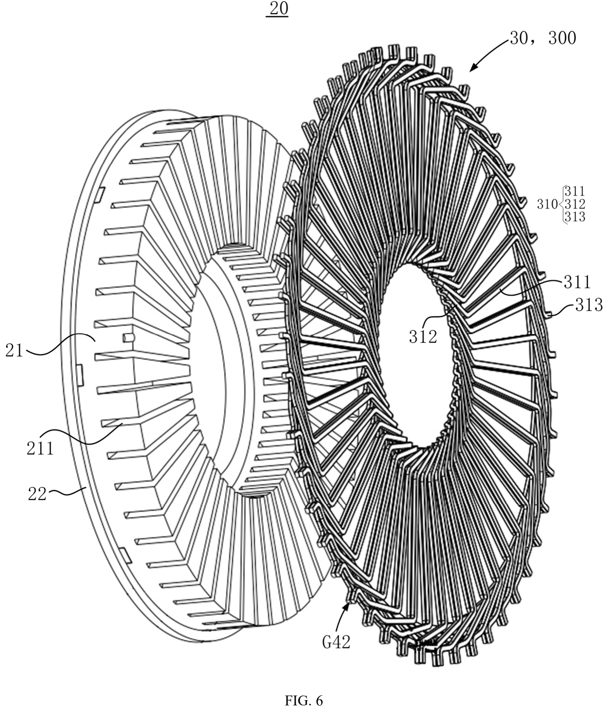

Reference is made to FIG. 6, where FIG. 6 is a schematic structural exploded view of a stator 20 according to some embodiments of the present application.

Reference is also made to FIG. 2, where an embodiment of the present application provides a stator 20 including a stator core 21 and a winding structure 30. The winding structure 30 is mounted on the stator core 21, where stator slots 211 are provided on the stator core 21 to mount the winding structure 30. The winding structure 30 is provided on the stator core 21, so that a rotating magnetic field is generated during use. Providing the stator core 21 facilitates fixed mounting of the winding structure 30, and can enhance magnetic field distribution and strength generated by the winding structure 30 through the stator core 21, thereby increasing the power of the axial motor 100 using the stator 20.

The stator core 21 may be made of magnetically conductive materials such as silicon steel sheets. For a stator core 21 of an axial motor 100, silicon steel sheets can be wound and formed to reduce eddy current losses and improve the operating efficiency of the axial motor 100 using the stator 20. Certainly, the stator core 21 can also be made of other magnetically conductive materials.

In some embodiments, the stator 20 further includes a fixing bracket 22. The fixing bracket 22 refers to a structural member configured to fixedly support the stator core 21. The stator core 21 is mounted on the fixing bracket 22, and the stator core 21 is supported by the fixing bracket 22, so that the winding structure 30 is supported, facilitating mounting and use of the stator 20.

In some embodiments, the fixing bracket 22 may be made of a steel plate, providing good support for the stator core 21, and during connection, the stator core 21 can be welded to the fixing bracket 22 to allow the fixing bracket 22 to well support the stator core 21. Particularly, when the stator core 21 is formed by winding a silicon steel sheet, by welding the fixing bracket 22 to the stator core 21, the shape of the stator core 21 can be fixed through the fixing bracket 22, facilitating mounting of the winding structure 30 on the stator core 21.

In some embodiments, stator slots 211 are provided on an axial side of the stator core 21.

A side of the stator core 21 refers to a side along the axial direction of the stator core 21. Providing stator slots 211 on one side of the stator core 21 allows the mounting of the winding structure 30 on that side to form a stator 20 structure with a winding on one side.

Providing stator slots 211 on one side of the stator core 21 allows the mounting of the winding structure 30 on one side of the stator core 21, enabling the stator 20 using the stator core 21 to be applicable to an axial motor 100, where the axial motor 100 may be provided with a rotor 10 arranged on a side of the stator 20 of the axial motor 100.

In some embodiments, reference is also made to FIG. 4, where stator slots 211 are respectively provided on two opposite axial sides of the stator core 21.

The two opposite sides of the stator core 21 refer to two opposite sides along the axial direction of the stator core 21. Providing stator slots 211 respectively on two opposite sides of the stator core 21 allows mounting of winding structures 30 respectively on two sides of the stator core 21 to form a stator 20 structure with windings on two sides.

Providing stator slots 211 respectively on two opposite sides of the stator core 21 allows mounting of winding structures 30 respectively on two opposite sides of the stator core 21, enabling the stator 20 using the stator core 21 to be applicable to an axial motor 100, where the axial motor 100 may be provided with rotors 10 arranged respectively on two opposite sides of the stator 20 of the axial motor 100.

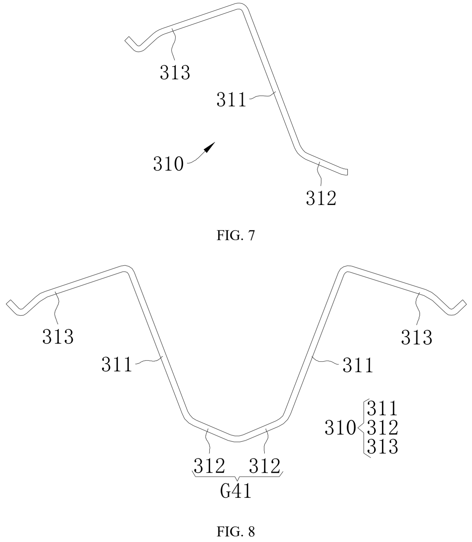

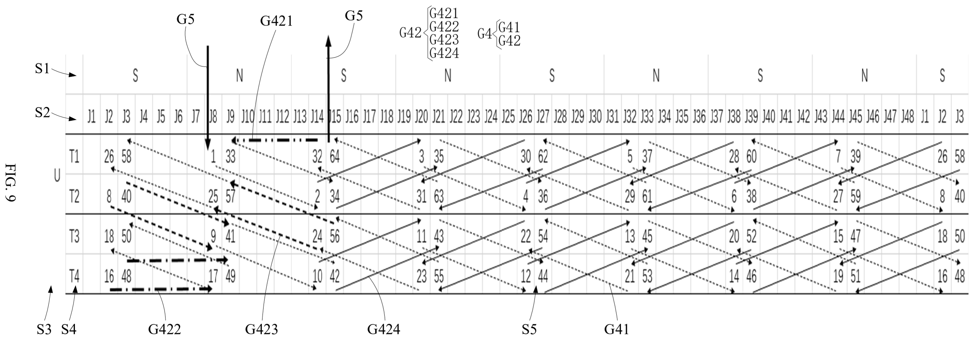

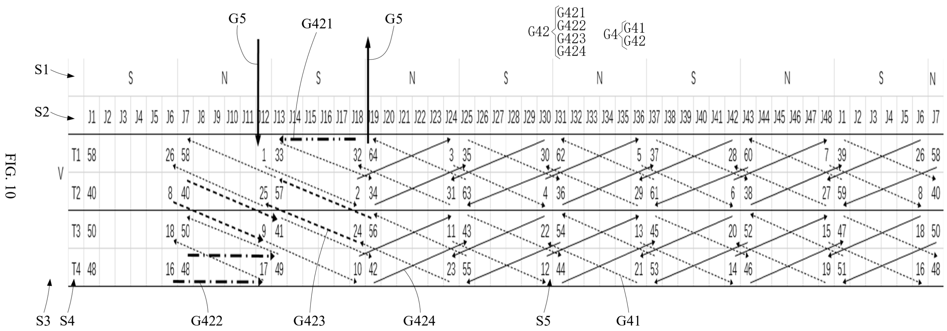

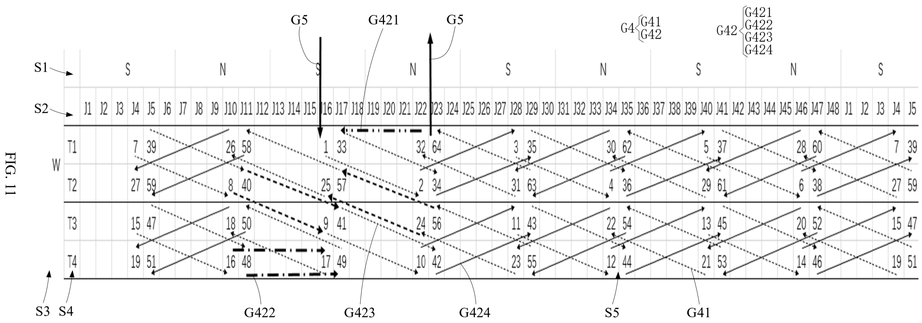

Reference is made to FIGs. 6 to 11, where FIG. 6 is a schematic structural exploded view of a stator 20 according to some embodiments of the present application; FIG. 7 is a schematic structural diagram of a single conductor component 310 according to some embodiments of the present application; FIG. 8 is a schematic structural diagram of a pair of paired conductor components 310 according to some embodiments of the present application; FIG. 9 is a schematic diagram of connecting wires of a U-phase winding of a winding structure 30 according to some embodiments of the present application; FIG. 10 is a schematic diagram of connecting wires of a V-phase winding of the winding structure 30 in FIG. 9; and FIG. 11 is a schematic diagram of connecting wires of a W-phase winding of the winding structure 30 in FIG. 9.

An embodiment of the present application provides a winding structure 30 including multiple conductor components 310, where the multiple conductor components 310 are arranged to form an annular body 300. As shown in FIG. 7, the conductor component 310 includes a main body portion 311 extending along a radial direction of the annular body 300, at least some of the main body portions 311 of the multiple conductor components 310 are connected in series via connecting wires G4, and lead-out wires G5 are respectively provided at two ends of a coil formed by the multiple main body portions 311 connected in series.

Conductor component 310 refers to a conductive body made of a conductive wire. Conductive wires for making windings are generally made of metallic copper to reduce the impedance of the conductive wires and allow larger current to flow through. Understandably, the conductive wires may alternatively be made of other materials with good conductive performance. For example, in some embodiments, the conductive wires may be made of materials such as aluminum.

Annular body 300 refers to a structure generally annular in shape. The multiple conductor components 310 are arranged to form an annular body 300, meaning the winding structure 30 made from these conductor components 310 is annular. When the winding structure 30 includes a single-phase winding, the single-phase winding is made by arranging conductor components 310, generally annular. In this case, the annular body 300 is the overall structure of the winding structure 30. When the winding structure 30 includes multi-phase windings, each phase of winding is made by arranging conductor components 310, each phase of winding is generally annular, and the winding structure 30 formed by the multi-phase windings is also annular. In this case, the annular body 300 is a structure formed by one phase of winding; and the annular bodies 300 formed by the multi-phase windings are combined to form the winding structure 30.

Main body portion 311 is a part of the structure of the conductor component 310. The main body portion 311 extends along the radial direction of the annular body 300, facilitating an application in an axial motor 100.

Connecting wire G4 is a conductive wire connecting two main body portions 311.

The main body portions 311 of the multiple conductor components 310 are connected in series via connecting wires G4, meaning connecting wires G4 are used to connect these main body portions 311 of the conductor components 310 in series to form a complete coil winding structure 30. When these main body portions 311 are connected in series, two main body portions 311 are located at two ends of the series-connected main body portions 311, and lead-out wires G5 are provided on the two main body portions 311 at the end portions to be connected to drive and control circuits, so as to supply power to the winding structure 30 to generate a magnetic field. Using connecting wires G4 to connect the main body portions 311 in series facilitates connection and facilitates mounting of the main body portions 311. Even after being mounted, the main body portions 311 can be connected via the connecting wires G4 to form a coil winding, so that the conductor components 310 can be mounted on the stator core 21 without being wound into coils, facilitating manufacturing of the winding structure 30.

In the technical solution of these embodiments of the present application, by providing multiple conductor components 310 and arranging the conductor components 310 to form an annular body 300, the positional layout of each conductor component 310 is facilitated. The main body portions 311 of the conductor components 310 are arranged along the radial direction, the main body portions 311 of at least some of the multiple conductor components 310 are connected in series via the connecting wires G4, and lead-out wires G5 are provided at two ends formed by the multiple main body portions 311 connected in series, not only facilitating positional arrangement of the main body portions 311 of the conductor components 310, but also facilitating the series connection of the conductor components 310 to the lead-out wires G5, without requiring a complicated winding process, thereby simplifying the structure and facilitating assembly and preparation.

In some embodiments, a cross section of the conductor component 310 is circular, elliptical, or polygonal.

The cross section of the conductor component 310 refers to a section perpendicular to a length direction of the conductor component 310. If the cross section of the conductor component 310 is circular, a circular conducive wire is used for the conductor component 310. If the cross section of the conductor component 310 is elliptical, an elliptical conducive wire is used for the conductor component 310. If the cross section of the conductor component 310 is polygonal, a polygonal conducive wire is used for the conductor component 310. A polygonal shape may be a triangle, a quadrilateral, or a polygon with more than four sides, where the quadrilateral may be a parallelogram, a trapezoid, or an irregular quadrilateral. Parallelogram can be a rectangle, a square, a rhombus, or other parallelograms. Polygon with more than four sides may be a pentagon, a hexagon, or the like.

The cross section of the conductor component 310 being circular, elliptical, or polygonal facilitates shape selection of the conductor component 310 and facilitates manufacturing of the winding structure 30.

In some embodiments, the connecting wires G4 include first connecting wires G41 and second connecting wires G42, the conductor components 310 are provided in pairs, and one end of each of the two main body portions 311 of each pair of conductor components 310 and one end of the other main body portion 311 are connected in series via the first connecting wire G41. In two pairs of conductor components 310 connected in series: the other end of one main body portion 311 in one pair of conductor components 310 is connected to the other end of one main body portion 311 in the other pair of conductor components 310 via the second connecting wire G42.

First connecting wire G41 refers to a connecting wire connecting one end of a main body portion 311 and one end of the other main body portion 311 of paired conductor components 310.

Second connecting wire G42 refers to a connecting wire connecting two pairs of conductor components 310 in series, and the second connecting wire G42 connects the other ends of the two main body portions 311 in the middle of the two pairs of conductor components 310 connected in series to achieve series connection of the two pairs of conductor components 310. The other end of one main body portion 311 in one pair of conductor components 310 is connected to the other end of one main body portion 311 in the other pair of conductor components 310 via the second connecting wire G42 to achieve series connection of the two pairs of conductor components 310. After the two pairs of conductor components 310 are connected in series, the other ends of the two main body portions 311 in the middle are connected in series via the second connecting wire G42.

Providing the first connecting wires G41 and second connecting wires G42 facilitates series connection of the conductor components 310. Particularly, two paired conductor components 310 are connected via the first connecting wire G41, achieving more convenient connection. The other end of one main body portion 311 in one pair of conductor components 310 is connected to the other end of one main body portion 311 in the other pair of conductor components 310 via the second connecting wire G42 so as to connect the two pairs of conductor components 310 in series, so that the other ends of the two main body portions 311 in the middle of the two pairs of conductor components 310 connected in series are connected via the second connecting wire G42, or the shape of the second connecting wire G42 is formed first before connection, which also facilitates assembly and thus facilitates manufacturing of the winding structure 30.

In some embodiments, the connecting wires G4 include first connecting wires G41 and second connecting wires G42, and the conductor components 310 are arranged in pairs, so that one end of the main body portion 311 of the conductor component 310, particularly a radial inner end, can be connected via the first connecting wire G41 to a radial inner end of the main body portion 311 of a conductor component 310 connected in series to an adjacent side; and the other end of the main body portion 311 of the conductor component 310, particularly a radial outer end, is connected via the second connecting wire G42 to a radial outer end of the main body portion 311 of the conductor component 310 connected in series to another adjacent side. In this structure, the first connecting wires G41 are arranged on the radial inner side of the manufactured winding structure 30, and the second connecting wires G42 are located on the radial outer side of the manufactured winding structure 30.

In some embodiments, the connecting wires G4 include first connecting wires G41 and second connecting wires G42, and the conductor components 310 are connected in pairs, so that one end of the main body portion 311 of the conductor components 310, particularly a radial outer end, can be connected via the first connecting wire G41 to a radial outer end of the main body portion 311 of a conductor component 310 connected in series to an adjacent side; and the other end of the main body portion 311 of the conductor component 310, particularly a radial inner end, is connected via the second connecting wire G42 to a radial inner end of the main body portion 311 of a conductor component 310 connected in series to another adjacent side. In this structure, the first connecting wires G41 are arranged on the radial outer side of the manufactured winding structure 30, and the second connecting wires G42 are located on the radial inner side of the manufactured winding structure 30.

In some embodiments, two conductor components 310 form a pair of conductor components 310, where the main body portions 311 of the two conductor components 310 in this pair of conductor components 310 are connected via the first connecting wire G41. Multiple pairs of conductor components 310 are sequentially connected in series to form one phase of winding coil.

In some embodiments, a span of the first connecting wires G41 is full pitch.

Setting the span of the first connecting wires G41 as full pitch facilitates batch forming and manufacturing to reduce costs and also facilitates connection of paired conductor components 310.

In some embodiments, the annular body 300 has N layers of main body portions 311 stacked along an axial direction, the two main body portions 311 of each pair of conductor components 310 are respectively located in the M-th layer and the (M-1)-th layer, N is an even number, M is an even number, and N ≥ M.

The annular body 300 has N layers of main body portions 311 stacked along an axial direction, meaning that at a position corresponding to each main body portion 311, N layers of main body portions 311 are stacked along the axial direction of the winding structure 30. When the winding structure 30 is mounted on the stator core 21, N layers of main body portions 311 are stacked in each stator slot 211 along an axial direction of the stator 20.

By providing the two main body portions 311 of paired conductor components 310 respectively in the M-th layer and the (M-1)-th layer, mounting positions of the paired conductor components 310 can be determined, facilitating mounting and fixation of the main body portions 311 of the pair of conductor components 310.

An even number of layers of main body portions 311 are provided at the position of each main body portion 311 to increase the magnetic force during operation of the winding structure 30; and the provision of the main body portions 311 of each pair of conductor components 310 in the M-th layer and the (M-1)-th layer can facilitate assembly of each pair of conductor components 310 in the entire winding structure 30.

In some embodiments, along the axial direction of the annular body 300: the lead-out wires G5 connected to two ends of the winding formed by the series-connected main body portions 311 are located in the same layer; the main body portions 311 connected to the lead-out wires G5 are in the first layer; the second connecting wires G42 in the first layer are first-layer connecting wires G421, where a span of the first-layer connecting wires G421 is long pitch or short pitch; the layer farthest from the first layer is the last layer; the second connecting wires G42 in the last layer are last-layer connecting wires G422, where a span of the last-layer connecting wires G422 is full pitch; the second connecting wires G42 connecting the H-th layer main body portion 311 and the (H+1)-th layer main body portion 311 are cross-layer connecting wires G423, where a span of the cross-layer connecting wires G423 is long pitch, full pitch, or short pitch; H is an even number; and N ≥ H.

The axial direction of the annular body 300 is also the axial direction of the winding structure 30, and when the winding structure 30 is applied in the stator 20, the axial direction of the winding structure 30 is also the axial direction of the stator 20.

Since N layers of main body portions 311 are stacked at positions corresponding to the main body portions 311, and the main body portions 311 in the same phase of winding are connected in series. Providing the main body portions 311 at two ends of the same phase of winding in the same axial layer of the annular body 300 not only facilitates layout design but also facilitates connection of the lead-out wires G5.

The layer where the main body portions 311 connected to the lead-out wires G5 are located can be defined as the first layer, and the farthest layer away from the first layer along the axial direction of the winding structure 30 is the last layer. For example, when the winding structure 30 is mounted on the stator core 21 and the main body portions 311 are stacked in corresponding stator slots 211 of the stator core 21, if the first layer is at the bottom of the stator slot 211, the last layer is at an opening of the stator slot 211; and if the first layer is at the opening of the stator slot 211, the last layer is at the bottom of the stator slot 211.

Since the two main body portions 311 of paired conductor components 310 are respectively in the M-th layer and the (M-1)-th layer, the connecting wire G4 in the first layer and the connecting wire G4 in the last layer are both second connecting wires G42. The second connecting wire G42 in the first layer is defined as a first-layer connecting wire G421, and the second connecting wire G42 in the last layer is defined as a last-layer connecting wire G422. There are even layers of main body portions 311 stacked and the main body portions 311 forming one phase of winding are connected in series and arranged annularly. Therefore, except for the first-layer connecting wire G421 and last-layer connecting wire G422, most second connecting wires G42 connect main body portions 311 in the T-th layer to main body portions 311 in the (T-1)-th layer, T is an even number, these second connecting wires G42 are defined as inter-layer connecting wires G424, and a span of the inter-layer connecting wires G424 is full pitch. Some other second connecting wires G42 need to connect main body portions 311 in the H-th layer to main body portions 311 in the (H+1)-th layer, and these second connecting wires G42 are defined as cross-layer connecting wires G423.

Providing the lead-out wires G5 in the first layer facilitates connection and leadout of the lead-out wires G5 for use. Setting the span of the first-layer connecting wires G421 as long pitch or short pitch allows for more flexible arrangement of the first-layer connecting wires G421, facilitating arrangement of conductor components 310 for manufacturing the winding structure 30. Setting the span of the last-layer connecting wires G422 as full pitch can facilitate forming and connection of the last-layer connecting wires G422. Setting the span of the cross-layer connecting wires G423 as full pitch, long pitch, or short pitch allows for more flexible arrangement of the cross-layer connecting wires G423, facilitating arrangement of conductor components 310 for manufacturing the winding structure 30. Since most second connecting wires G42 are inter-layer connecting wires G424, setting the span of the inter-layer connecting wires G424 as full pitch facilitates forming, manufacturing, and connection of the main body portions 311 and the inter-layer connecting wires G424.

Setting the span of the first-layer connecting wires G421 as short pitch can effectively reduce harmonic wave in the winding structure 30 and suppress eddy current losses of the rotor. Setting the span of the cross-layer connecting wires G423 as short pitch can also effectively reduce harmonic wave in the winding structure 30 and suppress eddy current losses of the rotor.

In some embodiments, the winding structure 30 forms P magnetic pole pairs, a quantity of series-connected main body portions 311 is A, and the first main body portion 311 and the A-th main body portion 311 are respectively connected to lead-out wires G5. In the second connecting wires G42 connecting the 2KP-th main body portion 311 and the (2KP+1)-th main body portion 311: the second connecting wires G42 connecting the 2KNP-th main body portion 311 and the (2KNP+1)-th main body portion 311 are the first-layer connecting wires G421, the second connecting wires G42 connecting the (2K-1)NP-th main body portion 311 and the ((2K-1)NP+1)-th main body portion 311 are the last-layer connecting wires G422, and the remaining second connecting wires G42 are cross-layer connecting wires G423, A is a positive integer, P is a positive integer, K is a positive integer, and 2KNP < A.

The quantity of series-connected main body portions 311 being A means that the quantity of main body portions 311 forming one phase of winding is A, and these main body portions 311 are connected in series, and accordingly there are A/2 pairs of conductor components 310. These main body portions 311 are numbered 1, 2, 3 ..., and A in a series connection order, where the first main body portion 311 and the A-th main body portion 311 are respectively connected to lead-out wires G5. The 2KNP-th main body portion 311 and the (2KNP+1)-th main body portion 311 are connected via the first-layer connecting wire G421. The (2K-1)NP-th main body portion 311 and the ((2K-1)NP+1)-th main body portion 311 are connected via the last-layer connecting wire G422. The remaining of the second connecting wires G42 connecting the 2KP-th main body portions 311 and the (2KP+1)-th main body portions 311 are the cross-layer connecting wires G423. With this structure, the positions of the first-layer connecting wire G421, last-layer connecting wire G422, and cross-layer connecting wire G423 as well as the quantities of the main body portions 311 connected thereto can be determined, facilitating pre-processing and assembly connection.

In some embodiments, the conductor component 310 further includes an inner segment 312 and an outer segment 313, where the inner segment 312 is connected to a radial inner end of the main body portion 311, the outer segment 313 is connected to a radial outer end of the main body portion 311, and the two inner segments 312 of each pair of conductor components 310 are connected to form the first connecting wire G41. In two pairs of conductor components 310 connected in series: the outer segment 313 of one main body portion 311 in one pair of conductor components 310 is connected to the outer segment 313 of one main body portion 311 in the other pair of conductor components 310 to form the second connecting wire G42.

The inner segment 312 refers to a segment of the conductor component 310 connected to the radial inner side of the main body portion 311. The outer segment 313 refers to a segment of the conductor component 310 connected to the radial outer side of the main body portion 311. The main body portion 311 extends along the radial direction of the annular body 300, where the radial direction of the annular body 300 is the same as the radial direction of the winding structure 30. When the winding structure 30 is applied in the stator 20, the radial direction of the winding structure 30 is the same as the radial direction of the stator 20.

The radial inner side refers to a side along the radial direction of the stator 20 and close to the center of the stator 20 and also refers to a side along the radial direction of the winding structure 30 and close to the center of the annular winding structure 30. The radial outer side is a side in a direction opposite to the direction of the radial inner side, that is, a side along the radial direction of the winding structure 30 and away from the center of the annular winding structure 30.

The conductor component 310 is provided with the inner segment 312 and the outer segment 313, and the two inner segments 312 of each pair of conductor components 310 are connected to form the first connecting wire G41, that is, the two inner segments 312 of two conductor components 310 connected in series are connected to form the first connecting wire G41. This facilitates the arrangement of the first connecting wire G41 and the series connection of this pair of conductor components 310. Understandably, a separate first connecting wire G41 may alternatively be provided to connect the main body portions 311 of paired conductor components 310.

The two outer segments 313 in the middle of two pairs of conductor components 310 to be connected in series are connected to form the second connecting wire G42, that is, two outer segments 313 are connected to form the second connecting wire G42, allowing the two pairs of conductor components 310 to be connected in series and facilitating the arrangement of the second connecting wire G42. To be specific, the two outer segments 313 of two conductor components 310 connected in series are connected to form the second connecting wire G42. Understandably, a separate second connecting wire G42 may alternatively be provided to connect the two main body portions 311 in the middle of two pairs of conductor components 310 in series.

Additionally, in this structure, the first connecting wire G41 is provided on the radial inner side of the main body portion 311 and the second connecting wire G42 is provided on the radial outer side of the main body portion 311, reducing occupied space and reducing the volume of the winding structure 30.

In some embodiments, the conductor component 310 is manufactured using flat wires through integral formation.

The conductor component 310 is manufactured using flat wires through integral formation, meaning that the inner segment 312, main body portion 311, and outer segment 313 are manufactured using flat wires through integral formation. This can facilitate processing and manufacturing of the conductor components 310 to maintain the uniformity of resistivity along the length of the conductor component 310, reducing the impedance of the conductor component 310, and improving the conductive performance of the conductor component 310.

In some embodiments, each pair of conductor components 310 is manufactured using flat wires through integral formation.

As shown in FIG. 8, each pair of paired conductor components 310 is manufactured using flat wires through integral formation, meaning that one flat wire is pre-formed into two conductor components 310, and the inner segments 312 of the two conductor components 310 are integrally formed to facilitate processing and manufacturing and also to facilitate assembly of the conductor components 310 to form the winding structure 30. Additionally, this structure makes the pre-formed first connecting wires G41 have consistent structure, allowing for neat and tight arrangement at an inner circle of the annular winding structure 30, and effectively reducing an end height on the radial inner side of the winding structure 30, thereby improving manufacturability.

In some embodiments, in two pairs of conductor components 310 connected in series: the two outer segments 313 in the middle are welded together.

The two outer segments 313 in the middle of two pairs of conductor components 310 to be connected in series are welded, meaning that the two outer segments 313 forming the second connecting wire G42 are welded to enhance the connection strength, thereby providing good conductive performance between the two outer segments 313, reducing the impedance between the two outer segments 313, and also facilitating connection. Understandably, the two outer segments 313 in the middle of two pairs of conductor components 310 to be connected in series may alternatively be fixedly connected in other ways, for example, being connected, bound, or fixed through connecting terminals. Additionally, in this structure, the shape of each outer segment 313 can be pre-formed, the main body portions 311 are stacked in the axial direction, and correspondingly the outer segments 313 can be stacked and wound at the periphery of the winding structure 30. To be specific, the two outer segments 313 to be welded can be stacked along the axial direction, avoiding nesting of long-pitch and short-pitch connecting wires G4, so that the spacing between two outer segments 313 in each pair to be welded tends to be consistent, improving the welding quality and manufacturability. Alternatively, two connected outer segments 313 may alternatively be connected in an abutment manner in the circumferential direction.

In some embodiments, the winding structure 30 forms P magnetic pole pairs, where P is a positive integer.

By setting a quantity of the magnetic pole pairs formed by the winding structure 30 as a positive integer, the quantity of the magnetic pole pairs can be set as needed, facilitating the design and application range of the winding structure 30.

In some embodiments, the annular body 300 has N layers of main body portions 311 stacked along the axial direction, a quantity of the main body portions 311 located in the same axial layer of the annular body 300 and in the same magnetic pole is q, N is an even number, and q is a positive integer.

When the above structure is applied in a stator 20, a quantity of slots per pole per phase of the stator 20 may be q, facilitating the design and manufacturing of the winding structure 30; where q is a positive integer, and the quantity of slots per pole per phase is set as needed to expand the application range of the design of the winding structure 30.

In some embodiments, when q ≥ 2, the q main body portions 311 located in the same axial layer of the annular body 300 and in the same magnetic pole are adjacently arranged.

The q main body portions 311 located in the same axial layer of the annular body 300 and in the same magnetic pole means that these q main body portions 311 are in the same axial layer of the annular body 300 and these q main body portions 311 are in the same magnetic pole.

The q main body portions 311 in the same layer and in the same magnetic pole are adjacently arranged to concentrate the generated magnetic field, enhancing the magnetic field strength.

In some embodiments, the winding structure 30 includes a single-phase winding, and the winding is made from multiple conductor components 310 connected in series.

The winding structure 30 includes a single-phase winding and therefore has a simple structure and can be applied to a single-phase stator 20.

In some embodiments, the winding structure 30 includes multi-phase windings made from multiple conductor components 310 connected in series, all phases of windings have the same structure, and the multi-phase windings are uniformly distributed along the circumferential direction of the winding structure 30.

When the winding structure 30 includes multi-phase windings, the multiple phases of the winding structure 30 are configured to be the same to simplify the structure of each phase of winding, facilitating processing and manufacturing for application to a multi-phase stator 20.

Reference is still made to FIGs. 9 to 11, and reference is also made to FIGs. 6 and 8, where a number S1 row represents magnetic poles, there are 8 magnetic poles, and each magnetic pole includes 6 stator slots 211. A number S2 row represents numbers of the stator slot 211, where there are 48 stator slots 211 numbered as J1, J2, ..., and J48. A number S3 column represents winding phases. FIG. 9 shows a U-phase winding, FIG. 10 shows a V-phase winding, and FIG. 11 shows a W-phase winding, where the U-phase, V-phase, and W-phase windings have a phase difference of 120 degrees. A number S4 column represents numbers of layer quantity N of the main body portions 311, where there are 4 layers of main body portions 311, that is, N=4, the numbers are from T1 to T4, the T1 layer is the first layer, and the T4 layer is the last layer. A number S5 represents numbers of connection orders of the series-connected main body portions 311 in each phase of winding, indicating positions of the main body portions 311 in each layer in each stator slot 211, where a total quantity A of the main body portions 311 is 64, from 1 to 64. The 1st main body portion 311 and the 64th main body portion 311 are connected to lead-out wires G5. There are A/2 pairs of conductor components 310, that is, 32 pairs. The E-th main body portion 311 and the (E-1)-th main body portion 311 are connected via a first connecting wire G41, and E is an even number. The E-th main body portion 311 and the (E-1)-th main body portion 311 are respectively in the M-th layer and the (M-1)-th layer, M is an even number, M ≤ N, and E ≤ A. When the B-th main body portion 311 and the (B+1)-th main body portion 311 are respectively in the T-th layer and the (T-1)-th layer, B is an even number, the B-th main body portion 311 and the (B+1)-th main body portion 311 are connected via an inter-layer connecting wire G424, B < A, T is an even number, and T ≤ N. The 2KNP-th main body portion 311 and the (2KNP+1)-th main body portion 311 are connected via a first-layer connecting wire G421, for example, the 32nd main body portion 311 and the 33rd main body portion 311 are connected via a first-layer connecting wire G421. The (2K-1)NP-th main body portion 311 and the ((2K-1)NP+1)-th main body portion 311 are connected via a last-layer connecting wire G422, for example, the 16th main body portion 311 and the 17th main body portion 311 are connected via a last-layer connecting wire G422, and the 48th main body portion 311 and the 49th main body portion 311 are connected via a last-layer connecting wire G422. When the 2KP-th main body portion 311 and the (2KP+1)-th main body portion 311 are respectively in the H-th layer and the (H+1)-th layer, H is an even number, and N ≥ H. The 2KP-th main body portion 311 and the (2KP+1)-th main body portion 311 are connected via a cross-layer connecting wire G423, for example, the 8th main body portion 311 and the 9th main body portion 311 are connected via a cross-layer connecting wire G423, the 24th main body portion 311 and the 25th main body portion 311 are connected via a cross-layer connecting wire G423, the 40th main body portion 311 and the 41st main body portion 311 are connected via a cross-layer connecting wire G423, and the 56th main body portion 311 and the 57th main body portion 311 are connected via a cross-layer connecting wire G423. P represents a quantity of magnetic pole pairs, P is a positive integer, K is a positive integer, and 2KNP < A. As shown in FIG. 9, the quantity q of slots per pole per phase is equal to 2.

The U-phase winding, V-phase winding, and W-phase winding have identical connection structures, only with the stator slots 211 being offset backward by two numbers during winding.

In the embodiments of FIGs. 9 to 11, the span of the first connecting wires G41 is full pitch, the span of the first-layer connecting wires G421 is short pitch, the span of the last-layer connecting wires G422 is full pitch, the span of the cross-layer connecting wires G423 is full pitch, and the span of the inter-layer connecting wires G424 is full pitch. This structure allows the first connecting wires G41 pre-formed on the radial inner side of the winding structure 30 to have identical span and coordinated cross layer quantities, allowing for neat and tight arrangement on the radial inner side of the winding structure 30. The radial outer side of the winding structure 30 is preferably stacked and wound, helping to improve the consistency of weld point spacings, thereby improving the welding quality and manufacturability.

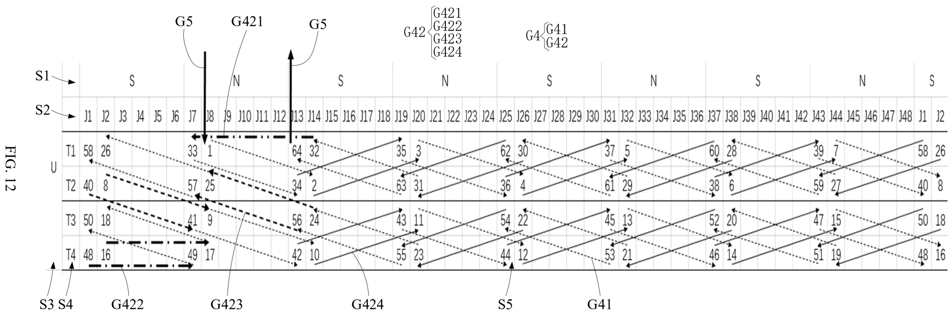

In one implementation, reference is made to FIG. 12, and reference is also made to FIGs. 6 and 8, where a number S1 row represents magnetic poles, there are 8 magnetic poles, and each magnetic pole includes 6 stator slots 211. A number S2 row represents numbers of the stator slots 211, where there are 48 stator slots 211 numbered as J1, J2, ..., and J48. A number S3 column represents winding phases. FIG. 12 shows a U-phase winding. A number S4 column represents numbers of layer quantity N of the main body portions 311, where there are 4 layers of main body portions 311, that is, N=4, the numbers are from T1 to T4, the T1 layer is the first layer, and the T4 layer is the last layer. A number S5 represents numbers of connection orders of the series-connected main body portions 311 in each layer in each phase of winding, indicating positions of the main body portions 311 in each layer in each stator slot 211, where a total quantity A of the main body portions 311 is 64, from 1 to 64. The 1st main body portion 311 and the 64th main body portion 311 are connected to lead-out wires G5. There are A/2 pairs of conductor components 310, that is, 32 pairs. The E-th main body portion 311 and the (E-1)-th main body portion 311 are connected via a first connecting wire G41, and E is an even number. The E-th main body portion 311 and the (E-1)-th main body portion 311 are respectively in the M-th layer and the (M-1)-th layer, M is an even number, M ≤ N, and E ≤ A. When the B-th main body portion 311 and the (B+1)-th main body portion 311 are respectively in the T-th layer and the (T-1)-th layer, B is an even number, the B-th main body portion 311 and the (B+1)-th main body portion 311 are connected via an inter-layer connecting wire G424, B < A, T is an even number, and T ≤ N. The 2KNP-th main body portion 311 and the (2KNP+1)-th main body portion 311 are connected via a first-layer connecting wire G421, for example, the 32nd main body portion 311 and the 33rd main body portion 311 are connected via a first-layer connecting wire G421. The (2K-1)NP-th main body portion 311 and the ((2K-1)NP+1)-th main body portion 311 are connected via a last-layer connecting wire G422, for example, the 16th main body portion 311 and the 17th main body portion 311 are connected via a last-layer connecting wire G422, and the 48th main body portion 311 and the 49th main body portion 311 are connected via a last-layer connecting wire G422. When the 2KP-th main body portion 311 and the (2KP+1)-th main body portion 311 are respectively in the H-th layer and the (H+1)-th layer, H is an even number, and N ≥ H. The 2KP-th main body portion 311 and the (2KP+1)-th main body portion 311 are connected via a cross-layer connecting wire G423, for example, the 8th main body portion 311 and the 9th main body portion 311 are connected via a cross-layer connecting wire G423, the 24th main body portion 311 and the 25th main body portion 311 are connected via a cross-layer connecting wire G423, the 40th main body portion 311 and the 41st main body portion 311 are connected via a cross-layer connecting wire G423, and the 56th main body portion 311 and the 57th main body portion 311 are connected via a cross-layer connecting wire G423. P represents a quantity of magnetic pole pairs, P is a positive integer, K is a positive integer, and 2KNP < A. As shown in FIG. 12, the quantity q of slots per pole per phase is equal to 2.

In FIG. 12, the span of the first connecting wires G41 is full pitch, the span of the first-layer connecting wires G421 is long pitch, the span of the last-layer connecting wires G422 is full pitch, the span of the cross-layer connecting wires G423 is full pitch, and the span of the inter-layer connecting wires G424 is full pitch. This structure allows the first connecting wires G41 pre-formed on the radial inner side of the winding structure 30 to have identical span and cross layer quantities, allowing for neat and tight arrangement on the radial inner side of the winding structure 30. The radial outer side of the winding structure 30 is stacked and wound, helping to improve the consistency of weld point spacings, thereby improving the welding quality and manufacturability. In FIG. 12, the span of the first-layer connecting wires G421 is set as long pitch to facilitate flexible position layout of the lead-out wires G5.

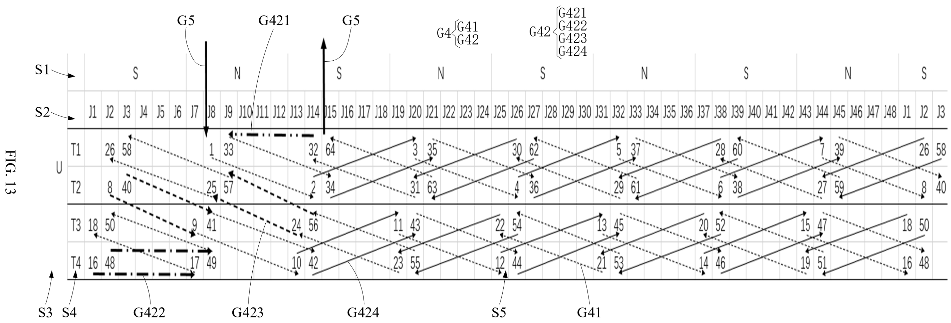

In another implementation, reference is made to FIG. 13, and reference is also made to FIGs. 6 and 8, where a number S1 row represents magnetic poles, there are 8 magnetic poles, and each magnetic pole includes 6 stator slots 211. A number S2 row represents numbers of the stator slots 211, where there are 48 stator slots 211 numbered as J1, J2, ..., and J48. A number S3 column represents winding phases, and FIG. 13 is U-phase winding. A number S4 column represents numbers of layer quantity N of the main body portions 311, where there are 4 layers of main body portions 311, that is, N=4, the numbers are from T1 to T4, the T1 layer is the first layer, and the T4 layer is the last layer. A number S5 represents numbers of connection orders of the series-connected main body portions 311 in each layer in each phase of winding, indicating positions of the main body portions 311 in each layer in each stator slot 211, where a total quantity A of the main body portions 311 is 64, from 1 to 64. The 1st main body portion 311 and the 64th main body portion 311 are connected to lead-out wires G5. There are A/2 pairs of conductor components 310, that is, 32 pairs. The E-th main body portion 311 and the (E-1)-th main body portion 311 are connected via a first connecting wire G41, and E is an even number. The E-th main body portion 311 and the (E-1)-th main body portion 311 are respectively in the M-th layer and the (M-1)-th layer, M is an even number, M ≤ N, and E ≤ A. When the B-th main body portion 311 and the (B+1)-th main body portion 311 are respectively in the T-th layer and the (T-1)-th layer, B is an even number, the B-th main body portion 311 and the (B+1)-th main body portion 311 are connected via an inter-layer connecting wire G424, B < A, T is an even number, and T ≤ N. The 2KNP-th main body portion 311 and the (2KNP+1)-th main body portion 311 are connected via a first-layer connecting wire G421, for example, the 32nd main body portion 311 and the 33rd main body portion 311 are connected via a first-layer connecting wire G421. The (2K-1)NP-th main body portion 311 and the ((2K-1)NP+1)-th main body portion 311 are connected via a last-layer connecting wire G422, for example, the 16th main body portion 311 and the 17th main body portion 311 are connected via a last-layer connecting wire G422, and the 48th main body portion 311 and the 49th main body portion 311 are connected via a last-layer connecting wire G422. When the 2KP-th main body portion 311 and the (2KP+1)-th main body portion 311 are respectively in the H-th layer and the (H+1)-th layer, H is an even number, and N ≥ H. The 2KP-th main body portion 311 and the (2KP+1)-th main body portion 311 are connected via a cross-layer connecting wire G423, for example, the 8th main body portion 311 and the 9th main body portion 311 are connected via a cross-layer connecting wire G423, the 24th main body portion 311 and the 25th main body portion 311 are connected via a cross-layer connecting wire G423, the 40th main body portion 311 and the 41st main body portion 311 are connected via a cross-layer connecting wire G423, and the 56th main body portion 311 and the 57th main body portion 311 are connected via a cross-layer connecting wire G423. P represents a quantity of magnetic pole pairs, P is a positive integer, K is a positive integer, and 2KNP < A. As shown in FIG. 13, the quantity q of slots per pole per phase is equal to 2.

In FIG. 13, the span of the first connecting wires G41 is full pitch, the span of the first-layer connecting wires G421 is short pitch, the span of the last-layer connecting wires G422 is full pitch, the span of the cross-layer connecting wires G423 is short pitch, and the span of the inter-layer connecting wires G424 is full pitch. This structure allows the first connecting wires G41 pre-formed on the radial inner side of the winding structure 30 to have identical span and cross layer quantities, allowing for neat and tight arrangement on the radial inner side of the winding structure 30. The radial outer side of the winding structure 30 is stacked and wound, helping to improve the consistency of weld point spacings, thereby improving the welding quality and manufacturability. In FIG. 13, the span of the cross-layer connecting wires G423 is set as short pitch to form a short-pitch winding, further reducing harmonic wave, thereby helping to suppress eddy current losses of the rotor.

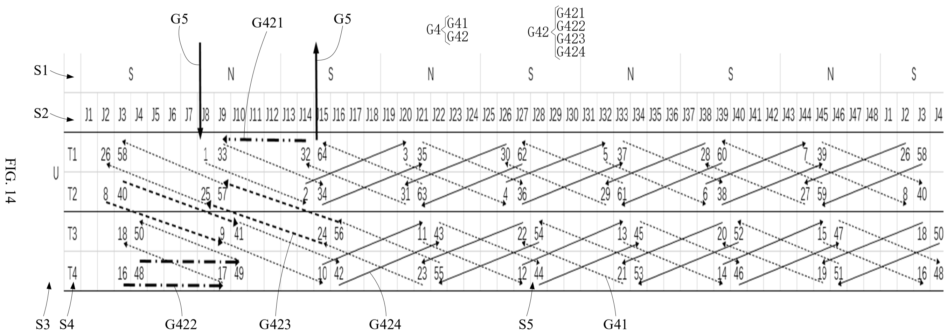

In another implementation, reference is made to FIG. 14, and reference is also made to FIGs. 6 and 8, where a number S1 row represents magnetic poles, there are 8 magnetic poles, and each magnetic pole includes 6 stator slots 211. A number S2 row represents numbers of the stator slots 211, where there are 48 stator slots 211 numbered as J1, J2, ..., and J48. A number S3 column represents winding phases, and FIG. 14 is U-phase winding. A number S4 column represents numbers of layer quantity N of the main body portions 311, where there are 4 layers of main body portions 311, that is, N=4, the numbers are from T1 to T4, the T1 layer is the first layer, and the T4 layer is the last layer. A number S5 represents numbers of connection orders of the series-connected main body portions 311 in each layer in each phase of winding, indicating positions of the main body portions 311 in each layer in each stator slot 211, where a total quantity A of the main body portions 311 is 64, from 1 to 64. The 1st main body portion 311 and the 64th main body portion 311 are connected to lead-out wires G5. There are A/2 pairs of conductor components 310, that is, 32 pairs. The E-th main body portion 311 and the (E-1)-th main body portion 311 are connected via a first connecting wire G41, and E is an even number. The E-th main body portion 311 and the (E-1)-th main body portion 311 are respectively in the M-th layer and the (M-1)-th layer, M is an even number, M ≤ N, and E ≤ A. When the B-th main body portion 311 and the (B+1)-th main body portion 311 are respectively in the T-th layer and the (T-1)-th layer, B is an even number, the B-th main body portion 311 and the (B+1)-th main body portion 311 are connected via an inter-layer connecting wire G424, B < A, T is an even number, and T ≤ N. The 2KNP-th main body portion 311 and the (2KNP+1)-th main body portion 311 are connected via a first-layer connecting wire G421, for example, the 32nd main body portion 311 and the 33rd main body portion 311 are connected via a first-layer connecting wire G421. The (2K-1)NP-th main body portion 311 and the ((2K-1)NP+1)-th main body portion 311 are connected via a last-layer connecting wire G422, for example, the 16th main body portion 311 and the 17th main body portion 311 are connected via a last-layer connecting wire G422, and the 48th main body portion 311 and the 49th main body portion 311 are connected via a last-layer connecting wire G422. When the 2KP-th main body portion 311 and the (2KP+1)-th main body portion 311 are respectively in the H-th layer and the (H+1)-th layer, H is an even number, and N ≥ H. The 2KP-th main body portion 311 and the (2KP+1)-th main body portion 311 are connected via a cross-layer connecting wire G423, for example, the 8th main body portion 311 and the 9th main body portion 311 are connected via a cross-layer connecting wire G423, the 24th main body portion 311 and the 25th main body portion 311 are connected via a cross-layer connecting wire G423, the 40th main body portion 311 and the 41st main body portion 311 are connected via a cross-layer connecting wire G423, and the 56th main body portion 311 and the 57th main body portion 311 are connected via a cross-layer connecting wire G423. P represents a quantity of magnetic pole pairs, P is a positive integer, K is a positive integer, and 2KNP < A. As shown in FIG. 14, the quantity q of slots per pole per phase is equal to 2.

In FIG. 14, the span of the first connecting wires G41 is full pitch, the span of the first-layer connecting wires G421 is short pitch, the span of the last-layer connecting wires G422 is full pitch, the span of the cross-layer connecting wires G423 is long pitch, and the span of the inter-layer connecting wires G424 is full pitch. This structure allows the first connecting wires G41 pre-formed on the radial inner side of the winding structure 30 to have identical span and cross layer quantities, allowing for neat and tight arrangement on the radial inner side of the winding structure 30. The radial outer side of the winding structure 30 is stacked and wound, helping to improve the consistency of weld point spacings, thereby improving the welding quality and manufacturability. In FIG. 14, the span of the cross-layer connecting wires G423 is set as long pitch to facilitate flexible position layout and connection of the main body portions 311 of the conductor components 310 in the winding structure 30.

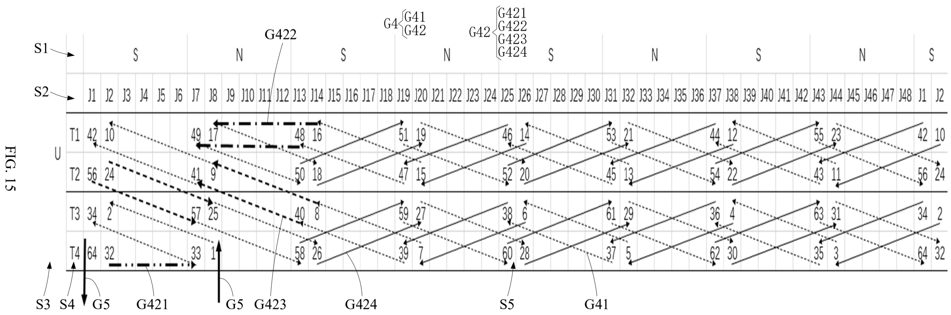

In another implementation, reference is made to FIG. 15, and reference is also made to FIGs. 6 and 8, where a number S1 row represents magnetic poles, there are 8 magnetic poles, and each magnetic pole includes 6 stator slots 211. A number S2 row represents numbers of the stator slots 211, where there are 48 stator slots 211 numbered as J1, J2, ..., and J48. A number S3 column represents winding phases, and FIG. 15 is U-phase winding. A number S4 column represents numbers of layer quantity N of the main body portions 311, where there are 4 layers of main body portions 311, that is, N=4, the numbers are from T4 to T1, the T4 layer is the first layer, and the T1 layer is the last layer. A number S5 represents numbers of connection orders of the series-connected main body portions 311 in each layer in each phase of winding, indicating positions of the main body portions 311 in each layer in each stator slot 211, where a total quantity A of the main body portions 311 is 64, from 1 to 64. The 1st main body portion 311 and the 64th main body portion 311 are connected to lead-out wires G5. There are A/2 pairs of conductor components 310, that is, 32 pairs. The E-th main body portion 311 and the (E-1)-th main body portion 311 are connected via a first connecting wire G41, and E is an even number. The E-th main body portion 311 and the (E-1)-th main body portion 311 are respectively in the M-th layer and the (M-1)-th layer, M is an even number, M ≤ N, and E ≤ A. When the B-th main body portion 311 and the (B+1)-th main body portion 311 are respectively in the T-th layer and the (T-1)-th layer, B is an even number, the B-th main body portion 311 and the (B+1)-th main body portion 311 are connected via an inter-layer connecting wire G424, B < A, T is an even number, and T ≤ N. The 2KNP-th main body portion 311 and the (2KNP+1)-th main body portion 311 are connected via a first-layer connecting wire G421, for example, the 32nd main body portion 311 and the 33rd main body portion 311 are connected via a first-layer connecting wire G421. The (2K-1)NP-th main body portion 311 and the ((2K-1)NP+1)-th main body portion 311 are connected via a last-layer connecting wire G422, for example, the 16th main body portion 311 and the 17th main body portion 311 are connected via a last-layer connecting wire G422, and the 48th main body portion 311 and the 49th main body portion 311 are connected via a last-layer connecting wire G422. When the 2KP-th main body portion 311 and the (2KP+1)-th main body portion 311 are respectively in the H-th layer and the (H+1)-th layer, H is an even number, and N ≥ H. The 2KP-th main body portion 311 and the (2KP+1)-th main body portion 311 are connected via a cross-layer connecting wire G423, for example, the 8th main body portion 311 and the 9th main body portion 311 are connected via a cross-layer connecting wire G423, the 24th main body portion 311 and the 25th main body portion 311 are connected via a cross-layer connecting wire G423, the 40th main body portion 311 and the 41st main body portion 311 are connected via a cross-layer connecting wire G423, and the 56th main body portion 311 and the 57th main body portion 311 are connected via a cross-layer connecting wire G423. P represents a quantity of magnetic pole pairs, P is a positive integer, K is a positive integer, and 2KNP < A. As shown in FIG. 15, the quantity q of slots per pole per phase is equal to 2.

In FIG. 15, the span of the first connecting wires G41 is full pitch, the span of the first-layer connecting wires G421 is short pitch, the span of the last-layer connecting wires G422 is full pitch, the span of the cross-layer connecting wires G423 is full pitch, and the span of the inter-layer connecting wires G424 is full pitch. This structure allows the first connecting wires G41 pre-formed on the radial inner side of the winding structure 30 to have identical span and cross layer quantities, allowing for neat and tight arrangement on the radial inner side of the winding structure 30. The radial outer side of the winding structure 30 is stacked and wound, helping to improve the consistency of weld point spacings, thereby improving the welding quality and manufacturability. In FIG. 15, the first layer is set as the T4 layer and the T1 layer is set as last layer to facilitate flexible position layout and connection of the main body portions 311 of the conductor components 310 and also facilitate the arrangement and leadout of the lead-out wires G5.

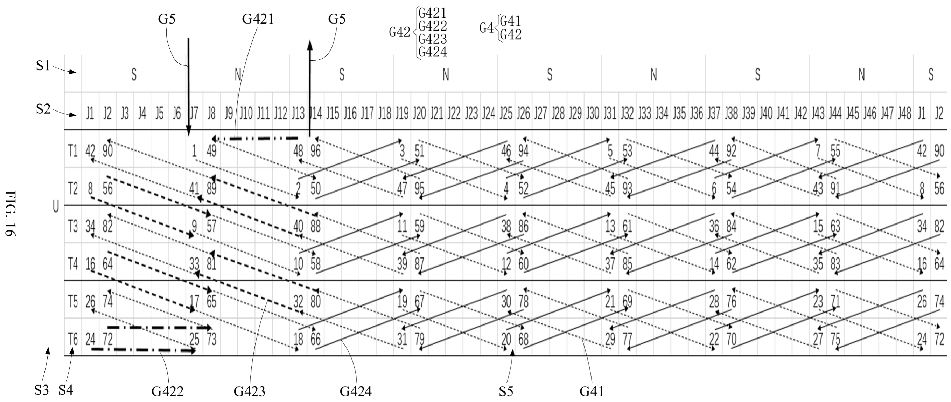

In another implementation, reference is made to FIG. 16, and reference is also made to FIGs. 6 and 8, where a number S1 row represents magnetic poles, there are 8 magnetic poles, and each magnetic pole includes 6 stator slots 211. A number S2 row represents numbers of the stator slots 211, where there are 48 stator slots 211 numbered as J1, J2, ..., and J48. A number S3 column represents winding phases, and FIG. 16 is U-phase winding. A number S4 column represents numbers of layer quantity N of the main body portions 311, where there are 6 layers of main body portions 311, that is, N=6, the numbers are from T1 to T6, the T1 layer is the first layer, and the T6 layer is the last layer. A number S5 represents numbers of connection orders of the series-connected main body portions 311 in each layer in each phase of winding, indicating positions of the main body portions 311 in each layer in each stator slot 211. A total quantity A of the main body portions 311 is 96, from 1 to 96. The 1st main body portion 311 and the 96th main body portion 311 are connected to lead-out wires G5. There are A/2 pairs of conductor components 310, that is, 48 pairs. The E-th main body portion 311 and the (E-1)-th main body portion 311 are connected via a first connecting wire G41, and E is an even number. The E-th main body portion 311 and the (E-1)-th main body portion 311 are respectively in the M-th layer and the (M-1)-th layer, M is an even number, M ≤ N, and E ≤ A. When the B-th main body portion 311 and the (B+1)-th main body portion 311 are respectively in the T-th layer and the (T-1)-th layer, B is an even number, the B-th main body portion 311 and the (B+1)-th main body portion 311 are connected via an inter-layer connecting wire G424, B < A, T is an even number, and T ≤ N. The 2KNP-th main body portion 311 and the (2KNP+1)-th main body portion 311 are connected via a first-layer connecting wire G421, for example, the 48th main body portion 311 and the 49th main body portion 311 are connected via a first-layer connecting wire G421. The (2K-1)NP-th main body portion 311 and the ((2K-1)NP+1)-th main body portion 311 are connected via a last-layer connecting wire G422, for example, the 24th main body portion 311 and the 25th main body portion 311 are connected via a last-layer connecting wire G422, and the 72nd main body portion 311 and the 73rd main body portion 311 are connected via a last-layer connecting wire G422. When the 2KP-th main body portion 311 and the (2KP+1)-th main body portion 311 are respectively in the H-th layer and the (H+1)-th layer, H is an even number, and N ≥ H. The 2KP-th main body portion 311 and the (2KP+1)-th main body portion 311 are connected via a cross-layer connecting wire G423, for example, the 8th main body portion 311 and the 9th main body portion 311 are connected via a cross-layer connecting wire G423, the 16th main body portion 311 and the 17th main body portion 311 are connected via a cross-layer connecting wire G423, the 32nd main body portion 311 and the 33rd main body portion 311 are connected via a cross-layer connecting wire G423, the 40th main body portion 311 and the 41st main body portion 311 are connected via a cross-layer connecting wire G423, the 56th main body portion 311 and the 57th main body portion 311 are connected via a cross-layer connecting wire G423, the 64th main body portion 311 and the 65th main body portion 311 are connected via a cross-layer connecting wire G423, the 80th main body portion 311 and the 81st main body portion 311 are connected via a cross-layer connecting wire G423, and the 88th main body portion 311 and the 89th main body portion 311 are connected via a cross-layer connecting wire G423. P represents a quantity of magnetic pole pairs, P is a positive integer, K is a positive integer, and 2KNP < A. As shown in FIG. 16, the quantity q of slots per pole per phase is equal to 2.

In FIG. 16, the span of the first connecting wires G41 is full pitch, the span of the first-layer connecting wires G421 is short pitch, the span of the last-layer connecting wires G422 is full pitch, the span of the cross-layer connecting wires G423 is full pitch, and the span of the inter-layer connecting wires G424 is full pitch. This structure allows the first connecting wires G41 pre-formed on the radial inner side of the winding structure 30 to have identical span and cross layer quantities, allowing for neat and tight arrangement on the radial inner side of the winding structure 30. The radial outer side of the winding structure 30 is stacked and wound, helping to improve the consistency of weld point spacings, thereby improving the welding quality and manufacturability. In FIG. 16, the quantity of stacked layers of main body portions 311 is set to 6 to increase the quantity of turns of coils connected in series in the winding structure 30, thereby expanding the motor power and torque range.

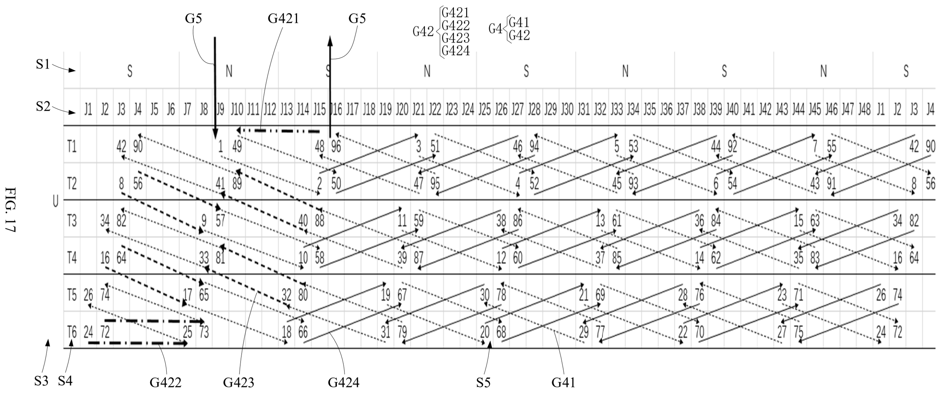

In another implementation, reference is made to FIG. 17, and reference is also made to FIGs. 6 and 8, where a number S1 row represents magnetic poles, there are 8 magnetic poles, and each magnetic pole includes 6 stator slots 211. A number S2 row represents numbers of the stator slots 211, where there are 48 stator slots 211 numbered as J1, J2, ..., and J48. A number S3 column represents winding phases, and FIG. 17 is U-phase winding. A number S4 column represents numbers of layer quantity N of the main body portions 311, where there are 6 layers of main body portions 311, that is, N=6, the numbers are from T1 to T6, the T1 layer is the first layer, and the T6 layer is the last layer. A number S5 represents numbers of connection orders of the series-connected main body portions 311 in each layer in each phase of winding, indicating positions of the main body portions 311 in each layer in each stator slot 211. A total quantity A of the main body portions 311 is 96, from 1 to 96. The 1st main body portion 311 and the 96th main body portion 311 are connected to lead-out wires G5. There are A/2 pairs of conductor components 310, that is, 48 pairs. The E-th main body portion 311 and the (E-1)-th main body portion 311 are connected via a first connecting wire G41, and E is an even number. The E-th main body portion 311 and the (E-1)-th main body portion 311 are respectively in the M-th layer and the (M-1)-th layer, M is an even number, M ≤ N, and E ≤ A. When the B-th main body portion 311 and the (B+1)-th main body portion 311 are respectively in the T-th layer and the (T-1)-th layer, B is an even number, the B-th main body portion 311 and the (B+1)-th main body portion 311 are connected via an inter-layer connecting wire G424, B < A, T is an even number, and T ≤ N. The 2KNP-th main body portion 311 and the (2KNP+1)-th main body portion 311 are connected via a first-layer connecting wire G421, for example, the 48th main body portion 311 and the 49th main body portion 311 are connected via a first-layer connecting wire G421. The (2K-1)NP-th main body portion 311 and the ((2K-1)NP+1)-th main body portion 311 are connected via a last-layer connecting wire G422, for example, the 24th main body portion 311 and the 25th main body portion 311 are connected via a last-layer connecting wire G422, and the 72nd main body portion 311 and the 73rd main body portion 311 are connected via a last-layer connecting wire G422. When the 2KP-th main body portion 311 and the (2KP+1)-th main body portion 311 are respectively in the H-th layer and the (H+1)-th layer, H is an even number, and N ≥ H. The 2KP-th main body portion 311 and the (2KP+1)-th main body portion 311 are connected via a cross-layer connecting wire G423, for example, the 8th main body portion 311 and the 9th main body portion 311 are connected via a cross-layer connecting wire G423, the 16th main body portion 311 and the 17th main body portion 311 are connected via a cross-layer connecting wire G423, the 32nd main body portion 311 and the 33rd main body portion 311 are connected via a cross-layer connecting wire G423, the 40th main body portion 311 and the 41st main body portion 311 are connected via a cross-layer connecting wire G423, the 56th main body portion 311 and the 57th main body portion 311 are connected via a cross-layer connecting wire G423, the 64th main body portion 311 and the 65th main body portion 311 are connected via a cross-layer connecting wire G423, the 80th main body portion 311 and the 81st main body portion 311 are connected via a cross-layer connecting wire G423, and the 88th main body portion 311 and the 89th main body portion 311 are connected via a cross-layer connecting wire G423. P represents a quantity of magnetic pole pairs, P is a positive integer, K is a positive integer, and 2KNP < A. As shown in FIG. 17, the quantity q of slots per pole per phase is equal to 2.

In FIG. 17, the span of the first connecting wires G41 is full pitch, the span of the first-layer connecting wires G421 is short pitch, the span of the last-layer connecting wires G422 is full pitch, the span of the cross-layer connecting wires G423 is short pitch, and the span of the inter-layer connecting wires G424 is full pitch. This structure allows the first connecting wires G41 pre-formed on the radial inner side of the winding structure 30 to have identical span and cross layer quantities, allowing for neat and tight arrangement on the radial inner side of the winding structure 30. The radial outer side of the winding structure 30 is stacked and wound, helping to improve the consistency of weld point spacings, thereby improving the welding quality and manufacturability. In FIG. 17, the quantity of stacked layers of main body portions 311 is set to 6 to increase the quantity of turns of coils connected in series in the winding structure 30, expanding the motor power and torque range. The span of the cross-layer connecting wires G423 is set as short pitch to form a short-pitch winding, further reducing harmonic wave, thereby helping to suppress eddy current losses of the rotor.

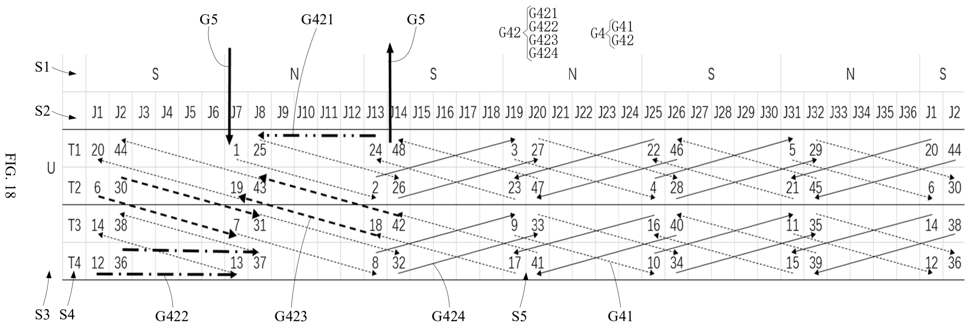

In another implementation, reference is made to FIG. 18, and reference is also made to FIGs. 6 and 8, where a number S1 row represents magnetic poles, there are 6 magnetic poles, and each magnetic pole includes 6 stator slots 211. A number S2 row represents numbers of the stator slots 211, where there are 36 stator slots 211 numbered as J1, J2, ..., and J36. A number S3 column represents winding phases, and FIG. 18 is U-phase winding. A number S4 column represents numbers of layer quantity N of the main body portions 311, where there are 4 layers of main body portions 311, that is, N=4, the numbers are from T1 to T4, the T1 layer is the first layer, and the T4 layer is the last layer. A number S5 represents numbers of connection orders of the series-connected main body portions 311 in each layer in each phase of winding, indicating positions of the main body portions 311 in each layer in each stator slot 211. A total quantity A of the main body portions 311 is 48, from 1 to 48. The 1st main body portion 311 and the 48th main body portion 311 are connected to lead-out wires G5. There are A/2 pairs of conductor components 310, that is, 24 pairs. The E-th main body portion 311 and the (E-1)-th main body portion 311 are connected via a first connecting wire G41, and E is an even number. The E-th main body portion 311 and the (E-1)-th main body portion 311 are respectively in the M-th layer and the (M-1)-th layer, M is an even number, M ≤ N, and E ≤ A. When the B-th main body portion 311 and the (B+1)-th main body portion 311 are respectively in the T-th layer and the (T-1)-th layer, B is an even number, the B-th main body portion 311 and the (B+1)-th main body portion 311 are connected via an inter-layer connecting wire G424, B < A, T is an even number, and T ≤ N. The 2KNP-th main body portion 311 and the (2KNP+1)-th main body portion 311 are connected via a first-layer connecting wire G421, for example, the 24th main body portion 311 and the 25th main body portion 311 are connected via a first-layer connecting wire G421. The (2K-1)NP-th main body portion 311 and the ((2K-1)NP+1)-th main body portion 311 are connected via a last-layer connecting wire G422, for example, the 12th main body portion 311 and the 13th main body portion 311 are connected via a last-layer connecting wire G422, and the 36th main body portion 311 and the 37th main body portion 311 are connected via a last-layer connecting wire G422. When the 2KP-th main body portion 311 and the (2KP+1)-th main body portion 311 are respectively in the H-th layer and the (H+1)-th layer, H is an even number, and N ≥ H. The 2KP-th main body portion 311 and the (2KP+1)-th main body portion 311 are connected via a cross-layer connecting wire G423, for example, the 6th main body portion 311 and the 7th main body portion 311 are connected via a cross-layer connecting wire G423, the 18th main body portion 311 and the 19th main body portion 311 are connected via a cross-layer connecting wire G423, the 30th main body portion 311 and the 31st main body portion 311 are connected via a cross-layer connecting wire G423, and the 42nd main body portion 311 and the 43rd main body portion 311 are connected via a cross-layer connecting wire G423. P represents a quantity of magnetic pole pairs, P is a positive integer, K is a positive integer, and 2KNP < A. As shown in FIG. 18, the quantity q of slots per pole per phase is equal to 2.

In FIG. 18, the span of the first connecting wires G41 is full pitch, the span of the first-layer connecting wires G421 is short pitch, the span of the last-layer connecting wires G422 is full pitch, the span of the cross-layer connecting wires G423 is full pitch, and the span of the inter-layer connecting wires G424 is full pitch. This structure allows the first connecting wires G41 pre-formed on the radial inner side of the winding structure 30 to have identical span and cross layer quantities, allowing for neat and tight arrangement on the radial inner side of the winding structure 30. The radial outer side of the winding structure 30 is stacked and wound, helping to improve the consistency of weld point spacings, thereby improving the welding quality and manufacturability. In FIG. 18, with 36 stator slots 211 and 6 magnetic poles, a quantity of magnetic poles and a quantity of stator slots 211 of the motor can be adjusted as needed, expanding the application range of the winding structure 30, and expanding the motor power and torque range.

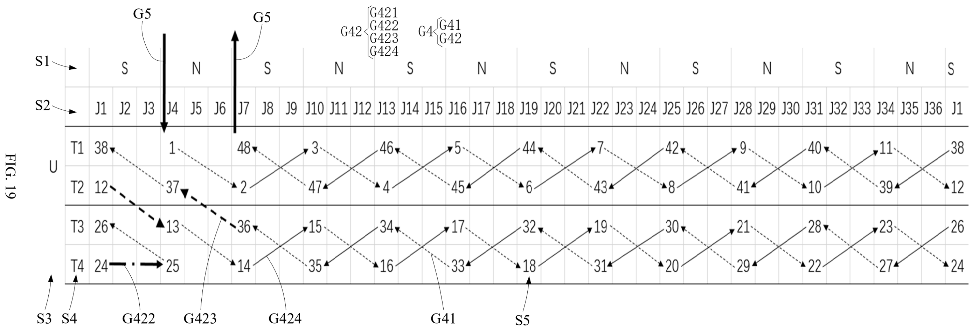

In another implementation, reference is made to FIG. 19, and reference is also made to FIGs. 6 and 8, where a number S1 row represents magnetic poles, there are 12 magnetic poles, and each magnetic pole includes 3 stator slots 211. A number S2 row represents numbers of the stator slots 211, where there are 36 stator slots 211 numbered as J1, J2, ..., and J36. A number S3 column represents winding phases, and FIG. 19 is U-phase winding. A number S4 column represents numbers of layer quantity N of the main body portions 311, where there are 4 layers of main body portions 311, that is, N=4, the numbers are from T1 to T4, the T1 layer is the first layer, and the T4 layer is the last layer. A number S5 represents numbers of connection orders of the series-connected main body portions 311 in each layer in each phase of winding, indicating positions of the main body portions 311 in each layer in each stator slot 211. A total quantity A of the main body portions 311 is 48, from 1 to 48. The 1st main body portion 311 and the 48th main body portion 311 are connected to lead-out wires G5. There are A/2 pairs of conductor components 310, that is, 24 pairs. The E-th main body portion 311 and the (E-1)-th main body portion 311 are connected via a first connecting wire G41, and E is an even number. The E-th main body portion 311 and the (E-1)-th main body portion 311 are respectively in the M-th layer and the (M-1)-th layer, M is an even number, M ≤ N, and E ≤ A. When the B-th main body portion 311 and the (B+1)-th main body portion 311 are respectively in the T-th layer and the (T-1)-th layer, B is an even number, the B-th main body portion 311 and the (B+1)-th main body portion 311 are connected via an inter-layer connecting wire G424, B < A, T is an even number, and T ≤ N. The (2K-1)NP-th main body portion 311 and the ((2K-1)NP+1)-th main body portion 311 are connected via a last-layer connecting wire G422, for example, the 24th main body portion 311 and the 25th main body portion 311 are connected via a last-layer connecting wire G422. When the 2KP-th main body portion 311 and the (2KP+1)-th main body portion 311 are respectively in the H-th layer and the (H+1)-th layer, H is an even number, and N ≥ H. The 2KP-th main body portion 311 and the (2KP+1)-th main body portion 311 are connected via a cross-layer connecting wire G423, for example, the 12th main body portion 311 and the 13th main body portion 311 are connected via a cross-layer connecting wire G423, and the 36th main body portion 311 and the 37th main body portion 311 are connected via a cross-layer connecting wire G423. P represents a quantity of magnetic pole pairs, P is a positive integer, K is a positive integer, and 2KNP < A. As shown in FIG. 19, a quantity q of slots per pole per phase is equal to 1.

In FIG. 19, the span of the first connecting wires G41 is full pitch, the span of the last-layer connecting wires G422 is full pitch, the span of the cross-layer connecting wires G423 is full pitch, and the span of the inter-layer connecting wires G424 is full pitch. This structure allows the first connecting wires G41 pre-formed on the radial inner side of the winding structure 30 to have identical span and cross layer quantities, allowing for neat and tight arrangement on the radial inner side of the winding structure 30. The radial outer side of the winding structure 30 is stacked and wound, helping to improve the consistency of weld point spacings, thereby improving the welding quality and manufacturability. In FIG. 19, there are 36 stator slots 211 and 12 magnetic poles, and the quantity q of slots per pole per phase is equal to 1, so that a quantity of magnetic poles and a quantity of stator slots 211 of the motor can be adjusted as needed, expanding the application range of the winding structure 30, and expanding the motor power and torque range.

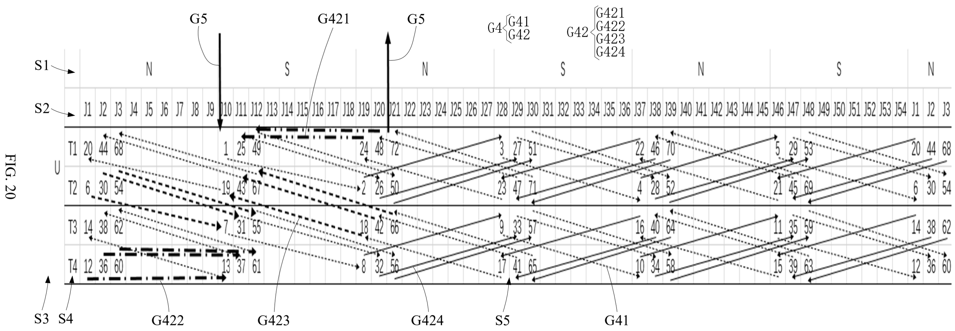

In another implementation, reference is made to FIG. 20, and reference is also made to FIGs. 6 and 8, where a number S1 row represents magnetic poles, there are 6 magnetic poles, and each magnetic pole includes 9 stator slots 211. A number S2 row represents numbers of the stator slots 211, where there are 54 stator slots 211 numbered as J1, J2, ..., and J54. A number S3 column represents winding phases, and FIG. 20 is U-phase winding. A number S4 column represents numbers of layer quantity N of the main body portions 311, where there are 4 layers of main body portions 311, that is, N=4, the numbers are from T1 to T4, the T1 layer is the first layer, and the T4 layer is the last layer. A number S5 represents numbers of connection orders of the series-connected main body portions 311 in each layer in each phase of winding, indicating positions of the main body portions 311 in each layer in each stator slot 211. A total quantity A of the main body portions 311 is 72, from 1 to 72. The 1st main body portion 311 and the 72nd main body portion 311 are connected to lead-out wires G5. There are A/2 pairs of conductor components 310, that is, 36 pairs. The E-th main body portion 311 and the (E-1)-th main body portion 311 are connected via a first connecting wire G41, and E is an even number. The E-th main body portion 311 and the (E-1)-th main body portion 311 are respectively in the M-th layer and the (M-1)-th layer, M is an even number, M ≤ N, and E ≤ A. When the B-th main body portion 311 and the (B+1)-th main body portion 311 are respectively in the T-th layer and the (T-1)-th layer, B is an even number, the B-th main body portion 311 and the (B+1)-th main body portion 311 are connected via an inter-layer connecting wire G424, B < A, T is an even number, and T ≤ N. The 2KNP-th main body portion 311 and the (2KNP+1)-th main body portion 311 are connected via a first-layer connecting wire G421, for example, the 24th main body portion 311 and the 25th main body portion 311 are connected via a first-layer connecting wire G421, and the 48th main body portion 311 and the 49th main body portion 311 are connected via a first-layer connecting wire G421. The (2K-1)NP-th main body portion 311 and the ((2K-1)NP+1)-th main body portion 311 are connected via a last-layer connecting wire G422, for example, the 12th main body portion 311 and the 13th main body portion 311 are connected via a last-layer connecting wire G422, the 36th main body portion 311 and the 37th main body portion 311 are connected via a last-layer connecting wire G422, and the 60th main body portion 311 and the 61st main body portion 311 are connected via a last-layer connecting wire G422. When the 2KP-th main body portion 311 and the (2KP+1)-th main body portion 311 are respectively in the H-th layer and the (H+1)-th layer, H is an even number, and N ≥ H. The 2KP-th main body portion 311 and the (2KP+1)-th main body portion 311 are connected via a cross-layer connecting wire G423, for example, the 6th main body portion 311 and the 7th main body portion 311 are connected via a cross-layer connecting wire G423, the 18th main body portion 311 and the 19th main body portion 311 are connected via a cross-layer connecting wire G423, the 30th main body portion 311 and the 31st main body portion 311 are connected via a cross-layer connecting wire G423, the 42nd main body portion 311 and the 43rd main body portion 311 are connected via a cross-layer connecting wire G423, the 54th main body portion 311 and the 55th main body portion 311 are connected via a cross-layer connecting wire G423, and the 66th main body portion 311 and the 67th main body portion 311 are connected via a cross-layer connecting wire G423. P represents a quantity of magnetic pole pairs, P is a positive integer, K is a positive integer, and 2KNP < A. As shown in FIG. 20, a quantity q of slots per pole per phase is equal to 3.

In FIG. 20, the span of the first connecting wires G41 is full pitch, the span of the first-layer connecting wires G421 is short pitch, the span of the last-layer connecting wires G422 is full pitch, the span of the cross-layer connecting wires G423 is full pitch, and the span of the inter-layer connecting wires G424 is full pitch. This structure allows the first connecting wires G41 pre-formed on the radial inner side of the winding structure 30 to have identical span and cross layer quantities, allowing for neat and tight arrangement on the radial inner side of the winding structure 30. The radial outer side of the winding structure 30 is stacked and wound, helping to improve the consistency of weld point spacings, thereby improving the welding quality and manufacturability. In FIG. 20, with 54 stator slots 211 and 6 magnetic poles, a quantity of magnetic poles and a quantity of stator slots 211 of the motor can be adjusted as needed, expanding the application range of the winding structure 30, and expanding the motor power and torque range.

An embodiment of the present application provides a winding structure 30 including multiple conductor components 310, where the multiple conductor components 310 are arranged to form an annular body 300. The conductor component 310 includes a main body portion 311, an inner segment 312, and an outer segment 313 that are manufactured using flat wires through integral formation. The main body portion 311 extends along a radial direction of the annular body 300, the inner segment 312 is connected to a radial inner end of the main body portion 311, and the outer segment 313 is connected to a radial outer end of the main body portion 311. The main body portions 311 of the multiple conductor components 310 are connected in series via connecting wires G4, and lead-out wires G5 are respectively provided at two ends formed by the multiple main body portions 311 connected in series. The connecting wires G4 include first connecting wires G41 and second connecting wires G42, the conductor components 310 are provided in pairs, and each pair of conductor components 310 is manufactured using flat wires through integral formation. The two inner segments 312 of each pair of conductor components 310 are connected to form first connecting wires G41, where a span of the first connecting wires G41 is set as full pitch, facilitating batch forming and manufacturing to reduce costs and also facilitating connection of paired conductor components 310. In two pairs of conductor components 310 connected in series: the two outer segments 313 in the middle are connected to form second connecting wires G42. Each pair of conductor components 310 is manufactured using flat wires through integral formation. In two pairs of conductor components 310 connected in series: the two outer segments 313 in the middle are welded together. The annular body 300 has N layers of main body portions 311 stacked along an axial direction, the two main body portions 311 of each pair of conductor components 310 are respectively in the M-th layer and the (M-1)-th layer, N is an even number, M is an even number, and N ≥ M. Along the axial direction of the annular body 300: the lead-out wires G5 connected to two ends of the series-connected main body portions 311 are located in the same layer, main body portions 311 connected to the lead-out wires G5 are located in the first layer, and the second connecting wires G42 in the first layer are first-layer connecting wires G421, where a span of the first-layer connecting wires G421 is long pitch or short pitch; a layer farthest from the first layer is the last layer, and the second connecting wires G42 in the last layer is last-layer connecting wires G422, where a span of the last-layer connecting wires G422 is full pitch; the second connecting wires G42 connecting H-th layer main body portion 311 and (H+1)-th layer main body portion 311 are cross-layer connecting wires G423, where a span of the cross-layer connecting wires G423 is long pitch, full pitch, or short pitch; H is an even number; and N ≥ H. The winding structure 30 forms P magnetic pole pairs, a quantity of the series-connected main body portions 311 is A, and the first main body portion 311 and the A-th main body portion 311 are respectively connected to lead-out wires G5. In second connecting wires G42 connecting the 2KP-th main body portion 311 and the (2KP+1)-th main body portion 311: second connecting wires G42 connecting the 2KNP-th main body portion 311 and the (2KNP+1)-th main body portion 311 is first-layer connecting wires G421, second connecting wires G42 connecting the (2K-1)NP-th main body portion 311 and the ((2K-1)NP+1)-th main body portion 311 are last-layer connecting wires G422; and the remaining second connecting wires G42 are cross-layer connecting wires G423. A is a positive integer, P is a positive integer, K is a positive integer, and 2KNP < A. This structure allows the first connecting wires G41 pre-formed on the radial inner side of the winding structure 30 to have identical span and cross layer quantities, allowing for neat and tight arrangement on the radial inner side of the winding structure 30. The radial outer side of the winding structure 30 is stacked and wound, helping to improve the consistency of weld point spacings, thereby improving the welding quality and manufacturability. Moreover, a quantity of magnetic poles and a quantity of stator slots 211 of the motor are adjusted as needed, expanding the application range of the winding structure 30, and expanding the motor power and torque range.

Reference is made to FIGs. 6 and 8, according to some embodiments of the present application, the present application further provides a stator 20 including the winding structure 30 as described in any of the above embodiments.

The stator 20 of this embodiment of the present application uses the above winding structure 30, simplifying the structure and facilitating assembly and manufacturing. Moreover, the winding structure 30 is manufactured using flat wires, increasing a proportion of winding coils per unit area, thereby increasing the output torque of an axial motor 100 using the stator 20.

In some embodiments, the stator 20 further includes a stator core 21. The stator core 21 is provided with stator slots 211 for accommodating the main body portions 311 of the winding structure 30, where the main body portions 311 are placed in corresponding stator slots 211.

Providing a stator core 21 and placing the main body portions 311 in corresponding stator slots 211 not only facilitates fixation of the main body portions 311 to mount and fix the winding structure 30, but also enhances the magnetic field strength generated by the winding structure 30 through the stator core 21, thereby increasing the power of the axial motor 100 using the stator 20.

In some embodiments, stator slots 211 are provided on an axial side of the stator core 21; or, stator slots 211 are respectively provided on two opposite axial sides of the stator core 21.

Providing stator slots 211 on one side of the stator core 21 allows mounting of the winding structure 30 on one side of the stator core 21, enabling the stator 20 using the stator core 21 to be applicable to an axial motor 100, where the axial motor 100 is provided with a rotor 10 on one side of the stator 20 of the axial motor 100.

Providing stator slots 211 respectively on two opposite sides of the stator core 21 allows mounting of winding structures 30 respectively on two opposite sides of the stator core 21, enabling the stator 20 using the stator core 21 to be applicable to an axial motor 100, where the axial motor 100 is provided with rotors 10 respectively on two opposite sides of the stator 20 of the axial motor 100. Providing stator slots 211 respectively on two opposite sides of the stator core 21 and installing winding structures 30 respectively on two opposite sides of the stator core 21 may also increase the degree of integration.

In some embodiments, when stator slots 211 are respectively provided on two opposite sides of the stator core 21, the stator slots 211 on the two opposite sides of the stator core 21 may be spaced apart, forming a magnetically conductive plate structure in an axial middle part of the stator core 21 to separate the stator slots 211 on the two sides. The magnetically conductive plate structure can, to some extent, shield mutual influence between magnetic fields of winding structures 30 on the two sides of the stator 20, thereby improving the output torque and output efficiency of the axial motor 100 using the stator 20. Additionally, the provision of the magnetically conductive plate structure can also enhance the structural strength of the stator core 21, thereby enhancing the structural strength of the stator 20.

In some embodiments, when the winding structure 30 is applied in a stator 20, the stator 20 is allowed to have no stator core 21, that is, the winding structure 30 is applied in a core-free stator 20 to reduce the weight of the stator 20, thereby reducing the weight of the axial motor 100 using the stator 20.

In some embodiments, when the winding structure 30 is applied in a core-free stator 20, the stator 20 may further include a support frame, the winding structure 30 can be mounted on the support frame, and the winding structure 30 is fixedly supported by the support frame to enhance the structural strength of the stator 20.

In some embodiments, when the winding structure 30 is supported by a support frame, the support frame may be provided with a mounting groove after being separately manufactured, to install and fix the winding structure 30. The support frame may be made of materials such as plastic, resin, and aluminum alloy.

In some embodiments, when the winding structure 30 is supported by a support frame, after the winding structure 30 is manufactured, the support frame may be formed on the winding structure 30 through molding injection, so that the winding structure 30 and the support frame form an integral structure to stably support the winding structure 30, maintaining a stable shape of the winding structure 30, facilitating use, and withstanding a reverse acting force from a magnetic field when a rotating magnetic field is generated, thereby driving the rotor 10 to rotate.

Reference is made to FIG. 2. According to some embodiments of the present application, the present application further provides an axial motor 100 including a rotating shaft 11, a rotor 10, and the stator 20 as described in any of the above embodiments, where the rotor 10 is fixedly mounted on the rotating shaft 11, the stator 20 is rotatably mounted on the rotating shaft 11, and the stator 20 is located on a side surface of the rotor 10.

The axial motor 100 of these embodiments of the present application uses the stator 20 of the above embodiments, simplifying the structure, reducing costs, improving the manufacturing efficiency, and reducing the size of the axial motor 100.

In some embodiments, reference is made to FIGs. 2 to 4, where a stator 20 is provided on at least one side of the rotor 10; and/or, a rotor 10 is provided on at least one side of the stator 20.

Providing a stator 20 on at least one side of the rotor 10 can facilitate positional layout of the stator 20, and providing a rotor 10 on at least one side of the stator 20 can facilitate positional layout of the rotor 10.

In some embodiments, reference is made to FIGs. 3 to 5, where there are multiple rotors 10, with a stator 20 provided between two adjacent rotors 10; and/or, there are multiple stators 20, with a rotor 10 provided between two adjacent stators 20.

Providing multiple rotors 10 enables a structure of an axial motor 100 with multiple rotors 10, and providing multiple stators 20 enables a structure of an axial motor 100 with multiple rotors 10.

Reference is made to FIG. 1. According to some embodiments of the present application, the present application further provides a power assembly 1001 including the stator 20 as described in any of the above embodiments or including the axial motor 100 as described in the above embodiments.

Reference is made to FIG. 1. According to some embodiments of the present application, the present application further provides an output device including the axial motor 100 as described in any of the above embodiments or including the power assembly 1001 as described in the above embodiments.

In conclusion, it should be noted that the above embodiments are merely used to illustrate the technical solutions of the present application rather than to limit them. Although the present application has been described in detail with reference to the foregoing embodiments, those of ordinary skill in the art should understand that modifications can still be made to the technical solutions recorded in the foregoing embodiments, or equivalent replacements may be made to some or all technical features therein; and these modifications or replacements do not make the essence of the corresponding technical solutions depart from the scope of the technical solutions of the embodiments of the present application, all of which should be covered within the scope of the claims and specification of the present application. In particular, as long as there is no structural conflict, the technical features mentioned in each embodiment can be combined in any manner. The present application is not limited to the specific embodiments disclosed herein but includes all technical solutions falling within the scope of the claims.

## Claims

1. A winding structure, **characterized by** comprising multiple conductor components, wherein the multiple conductor components are arranged to form an annular body; and
the conductor component comprises a main body portion, the main body portion extends along a radial direction of the annular body, the main body portions of at least some of the multiple conductor components are connected in series via connecting wires, and lead-out wires are respectively provided at two ends of a winding formed by the multiple main body portions connected in series.

2. The winding structure according to claim 1, **characterized in that** a cross section of the conductor component is circular, elliptical, or polygonal.

3. The winding structure according to claim 1 or 2, **characterized in that** the connecting wires comprise first connecting wires and second connecting wires; wherein the conductor components are provided in pairs; one end of one of the two main body portions of each pair of conductor components and one end of the other main body portion are connected in series via the first connecting wire; and in two pairs of conductor components connected in series, the other end of one main body portion in one pair of conductor components is connected to the other end of one main body portion in the other pair of conductor components via the second connecting wire.

4. The winding structure according to claim 3, **characterized in that** a span of the first connecting wires is full pitch.

5. The winding structure according to claim 3 or 4, **characterized in that** the annular body has N layers of main body portions stacked along an axial direction, wherein the two main body portions of each pair of conductor components are respectively located in the M-th layer and the (M-1)-th layer, N is an even number, M is an even number, and N ≥ M.

6. The winding structure according to claim 5, **characterized in that** along the axial direction of the annular body, the lead-out wires connected to two ends of the winding formed by the series-connected main body portions are located in the same layer; wherein the main body portions connected to the lead-out wires are in the first layer, the second connecting wires in the first layer are first-layer connecting wires, and a span of the first-layer connecting wires is long pitch or short pitch;
a layer farthest from the first layer is the last layer, the second connecting wires in the last layer are last-layer connecting wires, and a span of the last-layer connecting wires is full pitch; and
the second connecting wires connecting a main body portion in the H-th layer and a main body portion in the (H+1)-th layer are cross-layer connecting wires, a span of the cross-layer connecting wires is long pitch, full pitch, or short pitch, H is an even number, and N ≥ H.

7. The winding structure according to claim 6, **characterized in that** the winding structure forms P magnetic pole pairs; the number of series-connected main body portions is A; the first main body portion and the A-th main body portion are respectively connected to the lead-out wires; in the second connecting wires connecting the 2KP-th main body portion and the (2KP+1)-th main body portion: the second connecting wires connecting the 2KNP-th main body portion and the (2KNP+1)-th main body portion are the first-layer connecting wires, the second connecting wires connecting the (2K-1)NP-th main body portion and the ((2K-1)NP+1)-th main body portion are the last-layer connecting wires, and the remaining second connecting wires are the cross-layer connecting wires; and A is a positive integer, P is a positive integer, K is a positive integer, and 2KNP < A.

8. The winding structure according to any one of claims 3 to 7, **characterized in that** the conductor component further comprises an inner segment and an outer segment, wherein the inner segment is connected to a radial inner end of the main body portion, the outer segment is connected to a radial outer end of the main body portion, the two inner segments of each pair of conductor components are connected to form the first connecting wire, and in two pairs of conductor components connected in series: the two outer segments in the middle are connected to form the second connecting wire.

9. The winding structure according to claim 8, **characterized in that** the conductor component is manufactured using flat wires through integral formation.

10. The winding structure according to claim 8 or 9, **characterized in that** each pair of conductor components is manufactured using flat wires through integral formation.

11. The winding structure according to any one of claims 8 to 10, **characterized in that** in two pairs of conductor components connected in series, the outer segment of one main body portion in one pair of conductor components is welded to the outer segment of one main body portion in the other pair of conductor components.

12. The winding structure according to any one of claims 1 to 11, **characterized in that** the annular body has N layers of main body portions stacked along an axial direction, the number of main body portions located in the same axial layer of the annular body and in the same magnetic pole is q, N is an even number, and q is a positive integer.

13. The winding structure according to claim 12, **characterized in that** when q ≥ 2, the q main body portions located in the same axial layer of the annular body and in the same magnetic pole are adjacently arranged.

14. The winding structure according to any one of claims 1 to 13, **characterized in that** the winding structure comprises a single-phase winding, wherein the winding is made from multiple conductor components connected in series;
or, the winding structure comprises multi-phase windings, wherein the winding is made from multiple conductor components connected in series, all phases of windings have the same structure, and the multi-phase windings are uniformly distributed along a circumferential direction of the winding structure.

15. A stator, **characterized by** comprising the winding structure according to any one of claims 1 to 14.

16. The stator according to claim 15, **characterized in that** the stator further comprises a stator core, wherein the stator core is provided with stator slots for accommodating the main body portions of the winding structure, and the main body portions are arranged in corresponding stator slots.

17. The stator according to claim 16, **characterized in that** the stator slots are provided on an axial side of the stator core; or, the stator slots are respectively provided on two opposite axial sides of the stator core.

18. An axial motor, **characterized by** comprising a rotating shaft, a rotor, and the stator according to any one of claims 15 to 17, wherein the rotor is fixedly mounted on the rotating shaft, the stator is rotatably mounted on the rotating shaft, and the stator is located on a side surface of the rotor.

19. The axial motor according to claim 18, **characterized in that** the stator is provided on at least one side of the rotor; and/or, the rotor is provided on at least one side of the stator.

20. The axial motor according to claim 18 or 19, **characterized in that** there are multiple rotors, wherein the stator is provided between two adjacent rotors; and/or, there are multiple stators, wherein the rotor is provided between two adjacent stators.

21. A power assembly, **characterized by** comprising the stator according to any one of claims 15 to 17, or comprising the axial motor according to any one of claims 18 to 20.

22. An output device, **characterized by** comprising the axial motor according to any one of claims 18 to 20, or comprising the power assembly according to claim 21.
